(19) Europäisches Patentamt
European Patent Office
Office européen des brevets

(11) EP 3 553 673 A1

(12) EUROPEAN PATENT APPLICATION
published in accordance with Art. 153(4) EPC

(43) Date of publication:
16.10.2019 Bulletin 2019/42

(51) Int Cl.:
$G06F\ 17/15^{(2006.01)}$

(21) Application number: 17889060.4

(86) International application number:
PCT/CN2017/105890

(22) Date of filing: 12.10.2017

(87) International publication number:
WO 2018/120989 (05.07.2018 Gazette 2018/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 29.12.2016 CN 201611243272

(71) Applicant: Huawei Technologies Co., Ltd.
Longgang District
Shenzhen, Guangdong 518129 (CN)

(72) Inventors:
• XU, Bin
  Shenzhen
  Guangdong 518129 (CN)
• YUAN, Honghui
  Shenzhen
  Guangdong 518129 (CN)
• HE, Leijun
  Shenzhen
  Guangdong 518129 (CN)

(74) Representative: Maiwald Patent- und
Rechtsanwaltsgesellschaft mbH
Elisenhof
Elisenstraße 3
80335 München (DE)

(54) **CONVOLUTION OPERATION CHIP AND COMMUNICATION DEVICE**

(57)    A convolution operation chip (300) and a communications device are provided. The convolution operation chip (300) includes: an M×N multiplication accumulator array (320), including a first multiplication accumulation window, where a processing element $PE_{X,Y}$ of the first multiplication accumulation window is configured to: perform a multiplication operation on convolutional data of the $PE_{X,Y}$ and a convolutional parameter of the $PE_{X,Y}$, transmit the convolutional parameter of the $PE_{X,Y}$ to a $PE_{X,Y+1}$, transmit the convolutional data of the $PE_{X,Y}$ to a $PE_{X-1,Y+1}$, and respectively use the convolutional parameter of the $PE_{X,Y}$ and the convolutional data of the $PE_{X,Y}$ as multipliers of multiplication operations performed by the $PE_{X,Y+1}$ and the $PE_{X-1,Y+1}$; a data cache module (310), configured to transmit convolutional data and a convolutional parameter to the first multiplication accumulation window; and an output control module (330), configured to output a convolutional result. According to the convolution operation chip and the communications device, a quantity of times of accessing a RAM can be reduced while array resource utilization is improved, and access pressure of the RAM can be reduced.

FIG. 3

## Description

This application claims priority to Chinese Patent Application No. 201611243272.X, filed with the Chinese Patent Office on December 29, 2016 and entitled "CONVOLUTION OPERATION CHIP AND COMMUNICATIONS DEVICE", which is incorporated herein by reference in its entirety.

## TECHNICAL FIELD

This application relates to the artificial intelligence field, and more specifically, to a convolution operation chip and a communications device.

## BACKGROUND

A deep neural network (Deep Neural Networks, DNN) technology has become a representative algorithm in the artificial intelligence field, and key technologies such as character recognition, image classification, and speech recognition based on the deep neural network technology have been widely applied to products such as search engines and smartphones. Currently, a neural network algorithm that is currently most effective and that is most widely applied is a convolutional neural network (Convolutional Neural Network, CNN) algorithm, and is referred to as "convolution operation" for short. In the prior art, a core computation element of the CNN algorithm is a multiply-add operation. A multiplication accumulator (Multiplication Accumulator, MAC) array is usually applied to a matrix multiplication operation, and a convolution operation can be converted into the matrix multiplication operation. Therefore, the MAC array is widely used as specific acceleration hardware of a computation core in the industry, for example, a field programmable gate array (Field-Programmable Gate Array, FPGA) and an application-specific integrated circuit (Application Specific Integrated Circuits, ASIC), to accelerate a computation speed of the convolution operation.

In a solution of the prior art, when convolution operations are simultaneously performed in a plurality of convolutional windows in the MAC array, the convolutional windows are distributed on different locations in the MAC array, and consequently, not all processing elements in the MAC array are used. In addition, utilization of the MAC array is very low when a size of the MAC array does not adapt to a size of the plurality of convolutional windows. In addition, that the convolution operation can be converted into the matrix multiplication operation actually means that a large quantity of overlapped convolution operations are tiled into two large matrices, and a multiplication operation is performed on the two large matrices. There is a large amount of duplicate data in the two matrices, and all the data needs to be input to the MAC array for computation from a random access memory (Random Access Memory, RAM) by using an external data channel of the MAC array. Therefore, the large amount of duplicate data is input to the MAC array from the RAM, and this increases a quantity of times of accessing the RAM.

## SUMMARY

This application provides a convolution operation chip and a communications device, so that a quantity of times of accessing a RAM can be reduced while array resource utilization is improved, and access pressure of the RAM can be reduced.

According to a first aspect, a convolution operation chip is provided, and includes a data cache module, an M×N multiplication accumulator array, and an output control module. The data cache module is configured to transmit a plurality of pieces of convolutional data and a plurality of convolutional parameters used for a convolution operation to a first multiplication accumulation window in the M×N multiplication accumulator array, where the plurality of convolutional parameters are determined by the data cache module based on a first convolutional parameter matrix, the plurality of pieces of convolutional data are determined by the data cache module based on a first convolutional data matrix, the first convolutional parameter matrix includes A rows and B columns, the first convolutional data matrix includes D rows and E columns, the first multiplication accumulation window includes A rows and C columns, A is an integer greater than or equal to 2, B and C are each an integer greater than or equal to 1, D is a positive integer greater than or equal to A, E is an integer greater than or equal to max (B, C), M is a positive integer greater than or equal to A, and N is a positive integer greater than or equal to C. The first multiplication accumulation window includes A×C processing elements, a processing element in an $i^{th}$ row and a $j^{th}$ column is marked as $PE_{i,j}$, i is set to an integer each time in ascending order of 1 to A in sequence, and corresponding to each value of i, j is set to an integer each time in ascending order of 1 to C in sequence; a processing element $PE_{X,Y}$ of the first multiplication accumulation window is configured to perform a multiplication operation on convolutional data of the $PE_{X,Y}$ and a convolutional parameter of the $PE_{X,Y}$; and when C is greater than or equal to 2, the processing element $PE_{X,Y}$ is further configured to: transmit the convolutional parameter of the $PE_{X,Y}$ to a $PE_{X,Y+1}$, transmit the convolutional data of the $PE_{X,Y}$ to a $PE_{X-1,Y+1}$, and respectively use the convolutional parameter of the $PE_{X,Y}$ and the convolutional data of the $PE_{X,Y}$ as multipliers of multiplication operations performed by the $PE_{X,Y+1}$ and the $PE_{X-1,Y+1}$, where X is an integer greater than or equal to 2 and less than or equal to A, Y is an integer greater than or equal to 1 and less than or equal to C-1, the convolutional data of the $PE_{X,Y}$ is one of the plurality of pieces of convolutional data transmitted by the data cache module, and the convolutional parameter of the $PE_{X,Y}$ is one of the plurality of convolutional parameters transmitted by the data cache module. The first multiplication accumulation window is configured to perform an addition operation on a product obtained after a $PE_{i,J}$ performs a multiplication operation, to obtain a convolutional result, where J is an integer greater than or equal to 1 and less than or equal to C. The output control module is configured to output the convolutional result.

According to the convolution operation chip in the first aspect, a data transmission channel is added to any processing element, so that convolutional data and a convolutional parameter can be directly transmitted between adjacent processing elements. In addition, the data is in the first multiplication accumulation window in an entire transmission process, and no longer passes through a RAM, so that a quantity of times of accessing the RAM can be reduced, and power consumption can be reduced.

In a possible implementation of the first aspect, the convolution operation chip further includes: an array control module, configured to: determine the first multiplication accumulation window used for the convolution operation from the M×N multiplication accumulator array, determine a row quantity of the first multiplication accumulation window based on a row quantity of the first convolutional parameter matrix, and determine a column quantity of the first multiplication accumulation window based on the row quantity of the first convolutional parameter matrix and a row quantity of the first convolutional data matrix. In a specific implementation, the array control module specifically determines the column quantity of the first multiplication accumulation window according to the following formula: $C=D-A+1$. In this possible implementation, a size of a multiplication accumulation window is flexibly determined based on a size of a convolutional parameter matrix and a size of a convolutional data matrix, so that utilization of a MAC array and convolution operation efficiency can be improved as much as possible.

In a possible implementation of the first aspect, the first multiplication accumulation window is specifically configured to: in a $t^{\text{th}}$ clock cycle, perform a multiplication operation on convolutional data of a processing element $PE_{i,1}$ in a first column and a convolutional parameter of the $PE_{i,1}$, to obtain a product $X_{i,1}^{t}$, where the convolutional data of the $PE_{i,1}$ and the convolutional parameter of the $PE_{i,1}$ are transmitted by the data cache module to the $PE_{i,1}$; transmit a convolutional parameter of a $PE_{x,1}$ to a $PE_{x,2}$, transmit convolutional data of the $PE_{x,1}$ to a $PE_{x-1,2}$, and respectively use the convolutional parameter of the $PE_{x,1}$ and the convolutional data of the $PE_{x,1}$ as multipliers of multiplication operations performed by the $PE_{x,2}$ and the $PE_{x-1,2}$ in a $(t+1)^{\text{th}}$ clock cycle, where x is set to an integer each time in ascending order of 2 to A in sequence; and when t is set to each integer in a range [nB+1, nB+B], perform, by using the following formula, an addition operation on all products $X_{i,1}^{t}$ corresponding to all values of t, to obtain a convolutional result $S_1$:

$$S_1 = \sum_{t=nB+1}^{nB+B} \sum_{i=1}^{A} X_{i,1}^{t},$$

where
n is an integer greater than or equal to 0 and less than or equal to (E-B).

In a possible implementation of the first aspect, when C is greater than or equal to 2, the first multiplication accumulation window is further specifically configured to: perform a multiplication operation on convolutional data of a processing element $PE_{i,J'}$ in a $(J')^{\text{th}}$ column and a convolutional parameter of the $PE_{i,J'}$ in a $T^{\text{th}}$ clock cycle, to obtain a product $X_{i,J'}^{T}$, where J' is an integer greater than or equal to 2 and less than or equal to C, the convolutional parameter of the $PE_{i,J'}$ is obtained after convolutional data of a $PE_{i,J'-1}$ is transmitted to the $PE_{i,J'}$, convolutional data of a $PE_{h,J'}$ is obtained after convolutional data of a $PE_{h+1,J'-1}$ is transmitted to the $PE_{h,J'}$, a convolutional parameter of a $PE_{A,J'}$ and convolutional data of the $PE_{A,J'}$ are transmitted by the data cache module to the $PE_{A,J'}$, and h is set to an integer each time in ascending order of 1 to A-1 in sequence; and when T is set to each integer in a range [nB+J', nB+J'+B-1], perform, by using the following formula, an addition operation on all products $X_{i,J'}^{T}$ corresponding to all values of T, to obtain a convolutional result $S_{J'}$:

$$S_{J'} = \sum_{T=nB+J'}^{nB+J'+B-1} \sum_{i=1}^{A} X_{i,J'}^{T},$$

where

n is an integer greater than or equal to 0 and less than or equal to (E-B).

In a possible implementation of the first aspect, the D×E convolutional data matrix includes D×E pieces of convolutional data $a_{p,q}$, p is set to an integer each time in ascending order of 1 to D in sequence, and corresponding to each value of p, q is set to an integer each time in ascending order of 1 to E in sequence; the A×B convolutional parameter matrix includes A×B convolutional parameters $b_{p',q'}$, p' is set to an integer each time in ascending order of 1 to A in sequence, and corresponding to each value of p', q' is set to an integer each time in ascending order of 1 to B in sequence; and the data cache module includes: a cache, configured to cache the D×E pieces of convolutional data and the A×B convolutional parameters; and a counter, configured to determine, in an $(nB+P)^{th}$ clock cycle, that the convolutional data of the $PE_{i,1}$ is $a_{i,n+P}$, and the convolutional parameter of the $PE_{i,1}$ is $b_{i,P}$, where a value of P is an integer greater than or equal to 1 and less than or equal to B, and the counter is further configured to determine, in an $(nB+J'+Z-1)^{th}$ clock cycle, that the convolutional data of the $PE_{A,J}$ is $a_{A+J'-1,n+Z}$, and the convolutional parameter of the $PE_{A,J}$ is $b_{A,Z}$, where a value of Z is an integer greater than or equal to 1 and less than or equal to B.

In a possible implementation of the first aspect, the first multiplication accumulation window is further specifically configured to: in an $(nB+J)^{th}$ clock cycle, transmit a product $X_{1,J}^{nB+J}$ to a $PE_{2,J}$, and perform an addition operation on the product $X_{1,J}^{nB+J}$ and a product $X_{2,J}^{nB+J}$ to obtain a convolutional intermediate result $Q_{1}^{nB+J}$, where the product $X_{1,J}^{nB+J}$ is a product obtained after a $PE_{1,J}$ performs a multiplication operation on convolutional data of the $PE_{1,J}$ and a convolutional parameter of the $PE_{1,J}$ in the $(nB+J)^{th}$ clock cycle, and the product $X_{2,J}^{nB+J}$ is a product obtained after the $PE_{2,J}$ performs a multiplication operation on convolutional data of the $PE_{2,J}$ and a convolutional parameter of the $PE_{2,J}$ in the $(nB+J)^{th}$ clock cycle; transmit, to a $PE_{f+1,J}$, a convolutional intermediate result $Q_{f-1}^{nB+J}$ obtained after a $PE_{f,J}$ performs an addition operation, where f is set to an integer each time in ascending order of 2 to A-1 in sequence; perform an addition operation on the convolutional intermediate result $Q_{f-1}^{nB+J}$ and a product $X_{f+1,J}^{nB+J}$ obtained after the $PE_{f+1,J}$ performs a multiplication operation, to obtain a convolutional intermediate result $Q_{f}^{nB+J}$; transmit a convolutional intermediate result $Q_{A-1}^{nB+J}$ obtained in a $PE_{A,J}$ to the output control module for caching; transmit the convolutional intermediate result $Q_{A-1}^{nB+J}$ to the $PE_{1,J}$ in an $(nB+J+1)^{th}$ clock cycle, and use the convolutional intermediate result $Q_{A-1}^{nB+J}$ as an initial accumulation value of an addition operation performed in the $(nB+J+1)^{th}$ clock cycle; and determine, as a convolutional result $S_J$, a convolutional intermediate result $Q_{A}^{nB+J+1}$ obtained in an $((n+1)B+J-1)^{th}$ clock cycle.

In a possible implementation of the first aspect, when C is greater than or equal to 2, the first multiplication accumulation window further includes: a first register, disposed between the $PE_{X,Y+1}$ and the $PE_{X,Y}$, and configured to store and transmit the convolutional parameter of the $PE_{X,Y}$; a second register, disposed between the $PE_{X,Y+1}$ and a $PE_{X+1,Y}$, and configured to store and transmit convolutional data of the $PE_{X+1,Y}$; and a third register, disposed between the $PE_{X,Y+1}$ and a $PE_{X+1,Y+1}$, and configured to store and transmit a convolutional intermediate result, where the first register and the second register are further configured to rhythmically align convolutional data of the $PE_{X,Y+1}$ and a convolutional parameter of the $PE_{X,Y+1}$ when the $PE_{X,Y+1}$ performs a multiplication operation, and the third register is further configured to rhythmically align, when the first multiplication accumulation window performs an addition operation, a convolutional intermediate result transmitted by the $PE_{X,Y+1}$ and a product obtained after the $PE_{X+1,Y+1}$ performs a multiplication operation.

In a possible implementation of the first aspect, the M×N multiplication accumulator array further includes a second multiplication accumulation window, and the first multiplication accumulation window does not intersect with the second multiplication accumulation window.

In a possible implementation of the first aspect, the first convolutional data matrix is the same as a second convolutional data matrix, and the second convolutional data matrix is a convolutional data matrix to which convolutional data transmitted by the data cache module to the second multiplication accumulation window belongs; and the first convolutional parameter matrix is different from a second convolutional parameter matrix, and the second convolutional parameter matrix is a convolutional parameter matrix to which a convolutional parameter transmitted by the data cache module to the second multiplication accumulation window belongs.

In a possible implementation of the first aspect, the first convolutional data matrix is different from a second convolutional data matrix, and the second convolutional data matrix is a convolutional data matrix to which convolutional data transmitted by the data cache module to the second multiplication accumulation window belongs; and the first convolutional parameter matrix is the same as a second convolutional parameter matrix, and the second convolutional parameter matrix is a convolutional parameter matrix to which a convolutional parameter transmitted by the data cache module to the second multiplication accumulation window belongs.

According to a second aspect, a communications device is provided, including a central processing unit CPU, a double data rate synchronous dynamic random access memory DDR SDRAM, and the convolution operation chip according to any one of the first aspect and the possible implementations of the first aspect that are communicatively connected, where the CPU is configured to control the convolution operation chip to start the convolution operation, and the DDR SDRAM is configured to input the plurality of pieces of convolutional data and the plurality of convolutional parameters to the data cache module of the convolution operation chip.

According to a second aspect, a convolution operation method that is applied to a convolution operation chip is provided, and the convolution operation chip includes a data cache module, an M×N multiplication accumulator array, and an output control module. The method includes: transmitting, by the data cache module, a plurality of pieces of convolutional data and a plurality of convolutional parameters used for a convolution operation to a first multiplication accumulation window in the M×N multiplication accumulator array, where the plurality of convolutional parameters are determined by the data cache module based on a first convolutional parameter matrix, the plurality of pieces of convolutional data are determined by the data cache module based on a first convolutional data matrix, the first convolutional parameter matrix includes A rows and B columns, the first convolutional data matrix includes D rows and E columns, the first multiplication accumulation window includes A rows and C columns, A is an integer greater than or equal to 2, B and C are each an integer greater than or equal to 1, D is a positive integer greater than or equal to A, E is an integer greater than or equal to max (B, C), M is a positive integer greater than or equal to A, and N is a positive integer greater than or equal to C; including, by the first multiplication accumulation window, A×C processing elements, where a processing element in an $i^{th}$ row and a $j^{th}$ column is marked as $PE_{i,j}$, i is set to an integer each time in ascending order of 1 to A in sequence, and corresponding to each value of i, j is set to an integer each time in ascending order of 1 to C in sequence; performing, by a processing element $PE_{X,Y}$ of the first multiplication accumulation window, a multiplication operation on convolutional data of the $PE_{X,Y}$ and a convolutional parameter of the $PE_{X,Y}$; and when C is greater than or equal to 2, further transmitting, by the processing element $PE_{X,Y}$, the convolutional parameter of the $PE_{X,Y}$ to a $PE_{X,Y+1}$, transmitting the convolutional data of the $PE_{X,Y}$ to a $PE_{X-1,Y+1}$, and respectively using the convolutional parameter of the $PE_{X,Y}$ and the convolutional data of the $PE_{X,Y}$ multipliers of multiplication operations performed by the $PE_{X,Y+1}$ and the $PE_{X-1,Y+1}$, where X is an integer greater than or equal to 2 and less than or equal to A, Y is an integer greater than or equal to 1 and less than or equal to C-1, the convolutional data of the $PE_{X,Y}$ is one of the plurality of pieces of convolutional data transmitted by the data cache module, and the convolutional parameter of the $PE_{X,Y}$ is one of the plurality of convolutional parameters transmitted by the data cache module; performing, by the first multiplication accumulation window, an addition operation on a product obtained after a $PE_{i,J}$ performs a multiplication operation, to obtain a convolutional result, where J is an integer greater than or equal to 1 and less than or equal to C; and outputting, by the output control module, the convolutional result.

In a possible implementation of the third aspect, the convolution operation chip further includes an array control module, and the method further includes: determining, by the array control module, the first multiplication accumulation window used for the convolution operation from the M×N multiplication accumulator array; determining, by the array control module, a row quantity of the first multiplication accumulation window based on a row quantity of the first convolutional parameter matrix, and determining, by the array control module, a column quantity of the first multiplication accumulation window based on the row quantity of the first convolutional parameter matrix and a row quantity of the first convolutional data matrix.

In a possible implementation of the third aspect, the determining, by the array control module, a column quantity of the first multiplication accumulation window based on the row quantity of the first convolutional parameter matrix and a row quantity of the first convolutional data matrix includes: determining, by the array control module, the column quantity of the first multiplication accumulation window according to the following formula: *C=D-A+1.*

In a possible implementation of the third aspect, the performing, by the first multiplication accumulation window, an addition operation on a product obtained after a $PE_{i,J}$ performs a multiplication operation, to obtain a convolutional result includes: performing, by a processing element $PE_{i,1}$ in a first column, a multiplication operation on convolutional data of the $PE_{i,1}$ and a convolutional parameter of the $PE_{i,1}$ in a t$^{th}$ clock cycle, to obtain a product $X_{i,1}^{t}$, where the convolutional data of the $PE_{i,1}$ and the convolutional parameter of the $PE_{i,1}$ are transmitted by the data cache module to the $PE_{i,1}$; transmitting a convolutional parameter of a $PE_{x,1}$ to a $PE_{x,2}$, and transmitting convolutional data of the $PE_{x,1}$ to a $PE_{x-1,2}$, and respectively using the convolutional parameter of the $PE_{x,1}$ and the convolutional data of the $PE_{x,1}$ as multipliers of multiplication operations performed by the $PE_{x,2}$ and the $PE_{x-1,2}$ in a (t+1)$^{th}$ clock cycle, where x is set to an integer each time in ascending order of 2 to A in sequence; and when t is set to each integer in a range [nB+1, nB+B], performing, by using the following formula, an addition operation on all products $X_{i,1}^{t}$ corresponding to all values of t, to obtain a convolutional result $S_1$:

$$S_1 = \sum_{t=nB+1}^{nB+B} \sum_{i=1}^{A} X_{i,1}^{t},$$

where

n is an integer greater than or equal to 0 and less than or equal to (E-B).

In a possible implementation of the third aspect, when C is greater than or equal to 2, the performing, by the first multiplication accumulation window, an addition operation on a product obtained after a $PE_{i,J}$ performs a multiplication operation, to obtain a convolutional result includes: performing, by a processing element $PE_{i,J'}$ in a (J')$^{th}$ column, a multiplication operation on convolutional data of the $PE_{i,J'}$ and a convolutional parameter of the $PE_{i,J'}$ in a T$^{th}$ clock cycle, to obtain a product $X_{i,J'}^{T}$, where J' is an integer greater than or equal to 2 and less than or equal to C, the convolutional parameter of the $PE_{i,J'}$ is obtained after convolutional data of a $PE_{i,J'-1}$ is transmitted to the $PE_{i,J'}$, convolutional data of a $PE_{h,J'}$ is obtained after convolutional data of a $PE_{h+1,J'-1}$ is transmitted to the $PE_{h,J'}$, a convolutional parameter of a $PE_{A,J'}$ and convolutional data of the $PE_{A,J'}$ are transmitted by the data cache module to the $PE_{A,J'}$, and h is set to an integer each time in ascending order of 1 to A-1 in sequence; and when T is set to each integer in a range [nB+J', nB+J'+B-1], performing, by using the following formula, an addition operation on all products $X_{i,J'}^{T}$ corresponding to all values of T, to obtain a convolutional result $S_{J'}$:

$$S_{J'} = \sum_{T=nB+J'}^{nB+J'+B-1} \sum_{i=1}^{A} X_{i,J'}^{T},$$

where

n is an integer greater than or equal to 0 and less than or equal to (E-B).

In a possible implementation of the third aspect, the D×E convolutional data matrix includes D×E pieces of convolutional data $a_{p,q}$, p is set to an integer each time in ascending order of 1 to D in sequence, and corresponding to each value of p, q is set to an integer each time in ascending order of 1 to E in sequence; the A×B convolutional parameter matrix includes A×B convolutional parameters $b_{p',q'}$, p' is set to an integer each time in ascending order of 1 to A in sequence, and corresponding to each value of p', q' is set to an integer each time in ascending order of 1 to B in sequence; the data cache module includes a cache and a counter, and that the plurality of convolutional parameters are determined by the data cache module based on the first convolutional parameter matrix, and the plurality of pieces of convolutional data are determined by the data cache module based on the first convolutional data matrix includes: caching, by the cache, the D×E pieces of convolutional data and the A×B convolutional parameters; and determining, by the counter in an (nB+P)$^{th}$ clock cycle, that the convolutional data of the PE$_{i,1}$ is a$_{i,n+P}$, and the convolutional parameter of the PE$_{i,1}$ is b$_{i,P}$, where a value of P is an integer greater than or equal to 1 and less than or equal to B; and determining, by the counter in an (nB+J'+Z-1)$^{th}$ clock cycle, that the convolutional data of the PE$_{A,J'}$ is a$_{A+J'-1,n+Z}$, and the convolutional parameter of the PE$_{A,J}$ is b$_{A,Z}$, where a value of Z is an integer greater than or equal to 1 and less than or equal to B.

In a possible implementation of the third aspect, the performing, by the first multiplication accumulation window, an addition operation on a product obtained after a PE$_{i,J}$ performs a multiplication operation, to obtain a convolutional result includes: in an (nB+J)$^{th}$ clock cycle, transmitting a product $X_{1,J}^{nB+J}$ to a PE$_{2,J}$, and performing an addition operation on the product $X_{1,J}^{nB+J}$ and a product $X_{2,J}^{nB+J}$ to obtain a convolutional intermediate result $Q_1^{nB+J}$, where the product $X_{1,J}^{nB+J}$ is a product obtained after a PE$_{1,J}$ performs a multiplication operation on convolutional data of the PE$_{1,J}$ and a convolutional parameter of the PE$_{1,J}$ in the (nB+J)$^{th}$ clock cycle, and the product $X_{2,J}^{nB+J}$ is a product obtained after the PE$_{2,J}$ performs a multiplication operation on convolutional data of the PE$_{2,J}$ and a convolutional parameter of the PE$_{2,J}$ in the (nB+J)$^{th}$ clock cycle; transmitting, to a PE$_{f+1,J}$, a convolutional intermediate result $Q_{f-1}^{nB+J}$ obtained after a PE$_{f,J}$ performs an addition operation, where f is set to an integer each time in ascending order of 2 to A-1 in sequence; performing an addition operation on the convolutional intermediate result $Q_{f-1}^{nB+J}$ and a product $X_{f+1,J}^{nB+J}$ obtained after the PE$_{f+1,J}$ performs a multiplication operation, to obtain a convolutional intermediate result $Q_f^{nB+J}$; transmitting a convolutional intermediate result $Q_{A-1}^{nB+J}$ obtained in a PE$_{A,J}$ to the output control module for caching; transmitting the convolutional intermediate result $Q_{A-1}^{nB+J}$ to the PE$_{1,J}$ in an (nB+J+1)$^{th}$ clock cycle, and using the convolutional intermediate result $Q_{A-1}^{nB+J}$ as an initial accumulation value of an addition operation performed in the (nB+J+1)$^{th}$ clock cycle; and determining, as a convolutional result S$_J$, a convolutional intermediate result obtained in an ((n+1)B+J-1)$^{th}$ clock cycle.

In a possible implementation of the third aspect, when C is greater than or equal to 2, the first multiplication accumulation window further includes a first register disposed between the *PE$_{X,Y+1}$* and the PE$_{X,Y}$, a second register disposed between the PE$_{X,Y+1}$ and a PE$_{X+1,Y}$, and a third register disposed between the PE$_{X,Y+1}$ and a PE$_{X+1,Y+1}$, and the method further includes: storing and transmitting, by the first register, the convolutional parameter of the PE$_{X,Y}$; storing and transmitting, by the second register, convolutional data of the PE$_{X+1,Y}$; and storing and transmitting, by the third register, a convolutional intermediate result, where the first register and the second register rhythmically align convolutional data of the *PE$_{X,Y+1}$* and a convolutional parameter of the *PE$_{X,Y+1}$* when the PE$_{X,Y+1}$ performs a multiplication operation, and the third register rhythmically aligns, when the first multiplication accumulation window performs an addition operation, a convolutional intermediate result transmitted by the PE$_{X,Y+1}$ and a product obtained after the PE$_{X+1,Y+1}$ performs a multiplication operation.

In a possible implementation of the third aspect, the M×N multiplication accumulator array further includes a second multiplication accumulation window, and the first multiplication accumulation window does not intersect with the second multiplication accumulation window.

In a possible implementation of the third aspect, the first convolutional data matrix is the same as a second convolutional data matrix, and the second convolutional data matrix is a convolutional data matrix to which convolutional data transmitted by the data cache module to the second multiplication accumulation window belongs; and the first convolutional parameter matrix is different from a second convolutional parameter matrix, and the second convolutional parameter matrix is a convolutional parameter matrix to which a convolutional parameter transmitted by the data cache module to the second multiplication accumulation window belongs.

In a possible implementation of the third aspect, the first convolutional data matrix is different from a second convolutional data matrix, and the second convolutional data matrix is a convolutional data matrix to which convolutional data transmitted by the data cache module to the second multiplication accumulation window belongs; and the first convolutional parameter matrix is the same as a second convolutional parameter matrix, and the second convolutional parameter matrix is a convolutional parameter matrix to which a convolutional parameter transmitted by the data cache module to the second multiplication accumulation window belongs.

According to a fourth aspect, a computer readable medium is provided, and is configured to store a computer program. The computer program includes an instruction used to perform the method in any one of the third aspect and the possible implementations of the third aspect.

**BRIEF DESCRIPTION OF DRAWINGS**

FIG. 1 is a schematic block diagram of a communications device according to an embodiment of this application;
FIG. 2 is a schematic block diagram of a convolution operation chip according to an embodiment of this application;
FIG. 3 is a schematic block diagram of a multiplication accumulator array according to an embodiment of this application;
FIG. 4 is a schematic principle diagram of an operation process of a convolution operation method according to an embodiment of this application;
FIG. 5 is a schematic principle diagram of an operation process of a convolution operation method according to another embodiment of this application; and
FIG. 6 is a schematic principle diagram of an operation process of a convolution operation method according to still another embodiment of this application.

**DESCRIPTION OF EMBODIMENTS**

The following describes the embodiments of this application with reference to the accompanying drawings.

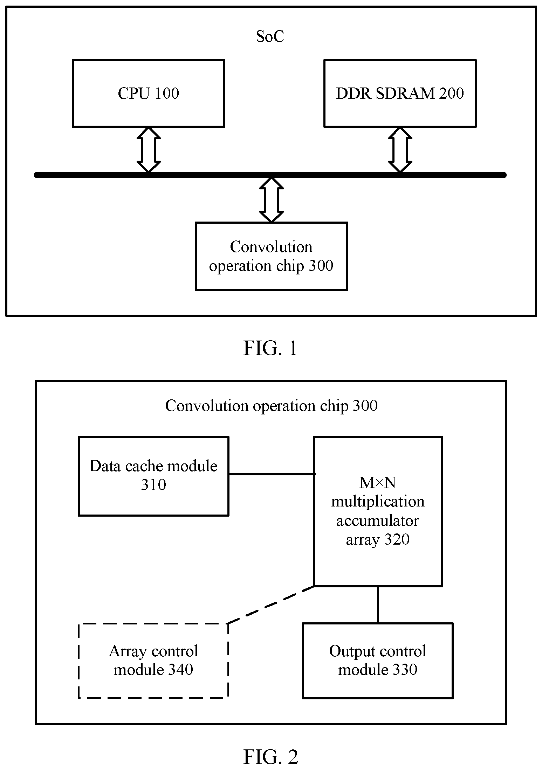

FIG. 1 is a diagram of an application scenario of a convolution operation chip according to an embodiment of this application. In a typical communications device, for example, in a system on chip (System on Chip, SoC), a hardware architecture includes a central processing unit (Central Processing unit, CPU) 100, a double data rate synchronous dynamic random access memory (Double Date Rate SDRAM, DDR SDRAM) 200, and a convolution operation chip 300 described in this embodiment of this application. The CPU 100, the DDR SDRAM 200, and the convolution operation chip 300 are communicatively connected. The CPU 100 controls the convolution operation chip 300 to start a convolution operation, the DDR SDRAM 200 is configured to input a plurality of pieces of convolutional data and a plurality of convolutional parameters to a data cache module of the convolution operation chip 300, and then the convolution operation chip 300 completes the convolution operation based on the obtained convolutional data and convolutional parameters, to obtain an operation result, writes the operation result to an agreed memory address in the DDR SDRAM 200, and notifies the CPU 100 that the convolution operation is completed.

FIG. 2 is a schematic block diagram of a convolution operation chip 300 according to an embodiment of this application. As shown in FIG. 2, the convolution operation chip 300 includes a data cache module 310, an M×N multiplication accumulator array 320, and an output control module 330.

The data cache module 310 is configured to transmit a plurality of pieces of convolutional data and a plurality of convolutional parameters used for a convolution operation to a first multiplication accumulation window in the M×N multiplication accumulator array 320. The plurality of convolutional parameters are determined by the data cache module 310 based on a first convolutional parameter matrix, and the plurality of pieces of convolutional data are determined by the data cache module 310 based on a first convolutional data matrix. The first convolutional parameter matrix includes A rows and B columns, the first convolutional data matrix includes D rows and E columns, the first multiplication accumulation window includes A rows and C columns, A is an integer greater than or equal to 2, B and C are each an integer greater than or equal to 1, D is a positive integer greater than or equal to A, E is an integer greater than or equal to max (B, C), M is a positive integer greater than or equal to A, and N is a positive integer greater than or equal to C.

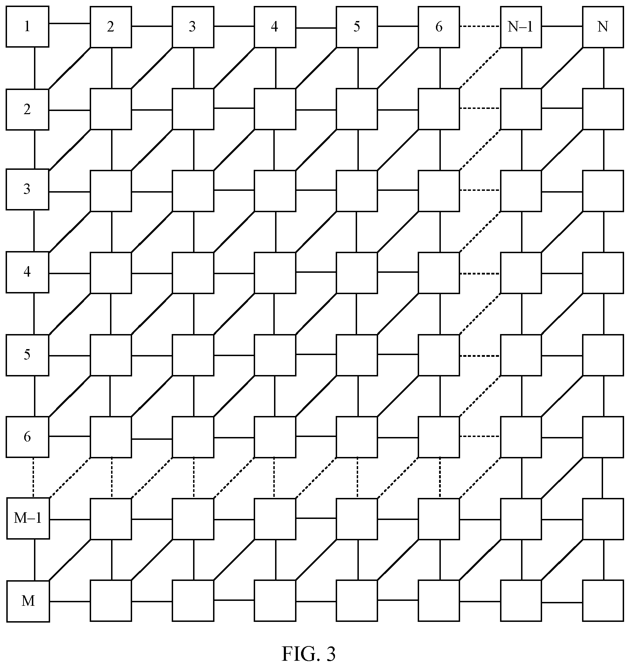

FIG. 3 is a schematic block diagram of the M×N multiplication accumulator array 320. As shown in FIG. 3, the multiplication accumulator array includes M×N processing elements. A processing element in a $u^{th}$ row and a $v^{th}$ column is marked as $PE_{u,v}$, u is set to an integer each time in ascending order of 1 to M in sequence, and corresponding to each value of u, v is set to an integer each time in ascending order of 1 to N in sequence. For a row, for example, a $U^{th}$ row, there is a transverse data transmission channel between a $PE_{U,\alpha}$ and a $PE_{U,\alpha+1}$, where U is an integer greater than or equal to 1 and less than or equal to M, and $\alpha$ is any integer greater than or equal to 1 and less than or equal to N-1.

There is a diagonal data transmission channel between a $PE_{\beta,\alpha}$ and a $PE_{\beta-1,\alpha+1}$, where $\alpha$ is any integer greater than or equal to 1 and less than or equal to N-1, and $\beta$ is any integer greater than or equal to 2 and less than or equal to M.

The first multiplication accumulation window in the M×N multiplication accumulator array 320 includes A×C processing elements. A processing element in an $i^{th}$ row and a $j^{th}$ column is marked as $PE_{i,j}$, i is set to an integer each time in ascending order of 1 to A in sequence, and corresponding to each value of i, j is set to an integer each time in ascending order of 1 to C in sequence. A processing element $PE_{X,Y}$ of the first multiplication accumulation window is configured to perform a multiplication operation on convolutional data of the $PE_{X,Y}$ and a convolutional parameter of the $PE_{X,Y}$. When C is greater than or equal to 2, the processing element $PE_{X,Y}$ is further configured to: transmit the convolutional parameter of the $PE_{X,Y}$ to a $PE_{X,Y+1}$, transmit the convolutional data of the $PE_{X,Y}$ to a $PE_{X-1,Y+1}$, and respectively use the convolutional parameter of the $PE_{X,Y}$ and the convolutional data of the $PE_{X,Y}$ as multipliers of multiplication operations performed by the $PE_{X,Y+1}$ and the $PE_{X-1,Y+1}$. X is an integer greater than or equal to 2 and less than or equal to A, and Y is an integer greater than or equal to 1 and less than or equal to C-1. The convolutional data of the $PE_{X,Y}$ is one of the plurality of pieces of convolutional data transmitted by the data cache module 310, and the convolutional parameter of the $PE_{X,Y}$ is one of the plurality of convolutional parameters transmitted by the data cache module 310.

The first multiplication accumulation window is configured to perform an addition operation on a product obtained after a $PE_{i,J}$ performs a multiplication operation, to obtain a convolutional result, where J is an integer greater than or equal to 1 and less than or equal to C.

The output control module 330 is configured to output the convolutional result.

Therefore, according to the convolution operation chip in this embodiment of this application, a data transmission channel is added to any processing element, so that convolutional data and a convolutional parameter can be directly transmitted between adjacent processing elements. In addition, the data is in the first multiplication accumulation window in an entire transmission process, and no longer passes through a RAM, so that a quantity of times of accessing the RAM can be reduced, and power consumption can be reduced.

It should be understood that the convolution operation chip 300 further includes an array control module 340, configured to: determine the first multiplication accumulation window used for the convolution operation from the M×N multiplication accumulator array 320 based on the first convolutional parameter matrix, and determine a row quantity of the first multiplication accumulation window based on a row quantity of the first convolutional parameter matrix. Specifically, the first convolutional parameter matrix includes A rows and B columns. Therefore, the row quantity of the first multiplication accumulation window selected for the convolution operation is also A, and a column quantity C of the first multiplication accumulation window may be a positive integer greater than or equal to 1 and less than or equal to N.

In this embodiment of this application, to improve MAC array utilization and convolution operation efficiency as much as possible, the array control module 320 may determine the column quantity of the first multiplication accumulation window based on the row quantity of the first convolutional parameter matrix and a row quantity of the first convolutional data matrix. Specifically, the array control module 320 may determine, according to the following formula (1), the column quantity C of the first multiplication accumulation window used for the convolution operation:

$$C = D - A + 1 \qquad (1)$$

The foregoing value of C is an optional manner. Certainly, a value greater than or less than a value obtained through computation by using the formula (1) may be selected for C. In this case, the convolution operation may still be implemented by adjusting input of a convolution matrix and the convolutional parameter. This is not limited in this embodiment of this application.

Therefore, the row quantity and the column quantity of the first multiplication accumulation window used for the convolution operation are determined by using the foregoing solution, so that use of a processing element of a multiplication accumulator is decoupled from a size of a convolutional parameter matrix, and the row quantity and the column quantity of the first multiplication accumulation window can be flexibly adjusted based on a requirement. Therefore, resource utilization can be improved, and operation performance of a device can be improved.

For example, assuming that the first convolutional parameter matrix includes three rows and four columns, a row quantity of a first convolutional window is determined as 3. In addition:

assuming that the first convolutional data matrix includes three rows, the column quantity C of the first multiplication accumulation window is determined as C=3-3+1=1;
assuming that the first convolutional data matrix includes four rows, the column quantity C of the first multiplication accumulation window is determined as C=4-3+1=2;
assuming that the first convolutional data matrix includes five rows, the column quantity C of the first multiplication accumulation window is determined as C=5-3+1=3;

assuming that the first convolutional data matrix includes six rows, the column quantity C of the first multiplication accumulation window is determined as C=6-3+1=4;

It should be understood that if the first convolutional data matrix has a relatively large size, for example, includes 256 rows of data, a value that is of C and that is obtained through computation by using the foregoing formula exceeds a maximum column quantity N of the multiplication accumulator, and therefore, the 256 rows of data may be calculated at a plurality of times.

An eight-row eight-column multiplication accumulator array is used as an example for description. A three-row eight-column first multiplication accumulation window may simultaneously convolute ten rows of convolutional data. Therefore, 26 convolution operations may be performed on the 256 rows of convolutional data: ten rows of convolutional data are convoluted at each of first 25 times, and remaining six rows of data are convoluted at a $26^{th}$ time.

To improve operation efficiency and array utilization, a plurality of rows of processing elements may be simultaneously activated as multiplication accumulation windows. For example, *floor((M/A)\*A* consecutive rows of processing elements may be selected and activated from the M-row N-column multiplication accumulator array. In the eight-row eight-column multiplication accumulator array, *floor((8/3)\*3=6* consecutive rows of processing elements may be activated. The three-row eight-column multiplication accumulation window may be configured to perform 25 convolution operations. Each of the 25 convolution operations is performed on different ten rows of data. A remaining three-row four-column multiplication accumulation window may perform the convolution operation on remaining six rows of data. Alternatively, the 26 convolution operations may be separately performed by two adjacent three-row eight-column multiplication accumulation windows. Each three-row eight-column multiplication accumulation window may perform the convolution operation on ten rows of data, and either three-row eight-column multiplication accumulator window can perform the convolution operation on remaining six rows of data. This is not limited in this embodiment of this application.

It is assumed that the D×E convolutional data matrix includes D×E pieces of convolutional data $a_{p,q}$, p is set to an integer each time in ascending order of 1 to D in sequence, and corresponding to each value of p, q is set to an integer each time in ascending order of 1 to E in sequence. The A×B convolutional parameter matrix includes A×B convolutional parameters $b_{p',q'}$, p' is set to an integer each time in ascending order of 1 to A in sequence, and corresponding to each value of p', q' is set to an integer each time in ascending order of 1 to B in sequence. A cache in the data cache module 310 is configured to cache the D×E pieces of convolutional data and the A×B convolutional parameters. In an $(nB+P)^{th}$ clock cycle, a counter in the data cache module 310 determines that convolutional data of a $PE_{i,1}$ is $a_{i,n+P}$, and a convolutional parameter of the $PE_{i,1}$ is $b_{i,P}$. A value of P is an integer greater than or equal to 1 and less than or equal to B, i is a variable, and i is set to an integer each time in ascending order of 1 to A in sequence. The counter determines, in an $(nB+J'+Z-1)^{th}$ clock cycle, that convolutional data of a $PE_{A,J'}$ is $a_{A+J'-1,n+Z}$, and a convolutional parameter of the $PE_{A,J'}$ is $b_{A,Z}$, where a value of Z is an integer greater than or equal to 1 and less than or equal to B.

The first multiplication accumulation window specifically performs the following steps: in a $t^{th}$ clock cycle, performing a multiplication operation on the convolutional data of the processing element $PE_{i,1}$ in a first column and the convolutional parameter of the $PE_{i,1}$, to obtain a product $X^{t}_{i,1}$, where the convolutional data of the $PE_{i,1}$ and the convolutional parameter of the $PE_{i,1}$ are transmitted by the data cache module 310 to the $PE_{i,1}$; transmitting a convolutional parameter of a $PE_{x,1}$ to a $PE_{x,2}$, transmitting convolutional data of the $PE_{x,1}$ to a $PE_{x-1,2}$, and respectively using the convolutional parameter of the $PE_{x,1}$ and the convolutional data of the $PE_{x,1}$ as multipliers of multiplication operations performed by the $PE_{x,2}$ and the $PE_{x-1,2}$ in a $(t+1)^{th}$ clock cycle, where x is set to an integer each time in ascending order of 2 to A in sequence; and when t is set to each integer in a range [nB+1, nB+B], performing, by using the following formula (2), an addition operation on all products $X^{t}_{i,1}$ corresponding to all values of t, to obtain a convolutional result $S_1$:

$$S_1 = \sum_{t=nB+1}^{nB+B} \sum_{i=1}^{A} X^{t}_{i,1} \qquad (2);$$

where
i is a variable, i is set to an integer each time in ascending order of 1 to A in sequence, and n is an integer greater than or equal to 0 and less than or equal to (E-B).

It can be learned from the formula (2) that the addition operation is to first calculate a sum of A (obtained based on changes of the variable i) $X_{i,1}^{t}$ obtained when t is set to each integer in the range [nB+1, nB+B], and then calculate a sum of B $X_{i,1}^{t}$ by using t as a variable.

Specifically, the first convolutional data matrix is:

$$\begin{pmatrix} a_{1,1} & \cdots & a_{1,E} \\ \vdots & \ddots & \vdots \\ a_{D,1} & \cdots & a_{D,E} \end{pmatrix}.$$

The first convolutional parameter matrix is:

$$\begin{pmatrix} b_{1,1} & \cdots & b_{1,B} \\ \vdots & \ddots & \vdots \\ b_{A,1} & \cdots & b_{A,B} \end{pmatrix}.$$

When n=0, in first to B$^{th}$ clock cycles, convolutional data transmitted by the data cache module 310 to a processing element $PE_{1,1}$ is separately $a_{1,1}$, $a_{1,2}$, $a_{1,3}$, ..., and $a_{1,B}$, and convolutional parameters transmitted to the processing element $PE_{1,1}$ are separately $b_{1,1}$, $b_{1,2}$, $b_{1,3}$, ..., and $b_{1,B}$; convolutional data transmitted by the data cache module 310 to a processing element $PE_{2,1}$ is separately $a_{2,1}$, $a_{2,2}$, $a_{2,3}$, ..., and $a_{2,B}$, and convolutional parameters transmitted to the processing element $PE_{2,1}$ are separately $b_{2,1}$, $b_{2,2}$, $b_{2,3}$, ..., and $b_{2,B}$; convolutional data transmitted by the data cache module 310 to a processing element $PE_{A,1}$ is separately $a_{A,1}$, $a_{A,2}$, $a_{A,3}$, ..., and $a_{A,B}$, and convolutional parameters transmitted to the processing element $PE_{A,1}$ are separately $b_{A,1}$, $b_{A,2}$, $b_{A,3}$, ..., and $b_{A,B}$.

When n=1, in (B+1)$^{th}$ to (2B)$^{th}$ clock cycles, convolutional data transmitted by the data cache module 310 to a processing element $PE_{1,1}$ is separately $a_{1,2}$, $a_{1,3}$, $a_{1,4}$, ..., and $a_{1,B+1}$, and convolutional parameters transmitted to the processing element $PE_{1,1}$ are separately $b_{1,1}$, $b_{1,2}$, $b_{1,3}$, ..., and $b_{1,B}$; convolutional data transmitted by the data cache module 310 to a processing element $PE_{2,1}$ is separately $a_{2,2}$, $a_{2,3}$, $a_{2,4}$, ..., and $a_{2,B+1}$, and convolutional parameters transmitted to the processing element $PE_{2,1}$ are separately $b_{2,1}$, $b_{2,2}$, $b_{2,3}$, ..., and $b_{2,B}$; convolutional data transmitted by the data cache module 310 to a processing element $PE_{A,1}$ is separately $a_{A,2}$, $a_{A,3}$, $a_{A,4}$, ..., and $a_{A,B+1}$, and convolutional parameters transmitted to the processing element $PE_{A,1}$ are separately $b_{A,1}$, $b_{A,2}$, $b_{A,3}$, ..., and $b_{A,B}$;

For a processing element in a column other than the first column, in a T$^{th}$ clock cycle, a processing element $PE_{i,J'}$ in a (J')$^{th}$ column performs a multiplication operation on convolutional data of the $PE_{i,J'}$ and a convolutional parameter of the $PE_{i,J'}$, to obtain a product $X_{i,J'}^{T}$, where i is set to an integer each time in ascending order of 1 to A in sequence, and J' is an integer greater than or equal to 2 and less than or equal to C. The convolutional parameter of the $PE_{i,J'}$ is obtained after a convolutional parameter of a $PE_{i,J'-1}$ is transmitted to the $PE_{i,J'}$, convolutional data of a $PE_{h,J'}$ is obtained after convolutional data of a $PE_{h+1,J'-1}$ is transmitted to the $PE_{h,J'}$, a convolutional parameter of a $PE_{A,J'}$ and convolutional data of a $PE_{A,J'}$ are transmitted by the data cache module 310 to the $PE_{A,J'}$, and h is set to an integer each time in ascending order of 1 to A-1 in sequence. Specifically, the counter determines, in an (nB+J'+Z-1)$^{th}$ clock cycle, that the convolutional data of the $PE_{A,J'}$ is $a_{A+J'-1,n+Z}$, and the convolutional parameter of the $PE_{A,J'}$ is $b_{A,Z}$. A value of Z is an integer greater than or equal to 1 and less than or equal to B.

When T is set to each integer in a range [nB+J', nB+J'+B-1], an addition operation is performed, by using the following formula (3), on all products $X_{i,J'}^{T}$, corresponding to all values of T, to obtain a convolutional result $S_{J'}$:

$$S_{J'} = \sum_{T=nB+J'}^{nB+J'+B-1} \sum_{i=1}^{A} X_{i,J'}^{T} \tag{3}$$

It can be learned from the formula (3) that the addition operation is to first calculate a sum of A (obtained based on changes of the variable i) $X_{i,J'}^{T}$ obtained when T is set to each integer in the range [nB+J', nB+J'+B-1], and then calculate a sum of B $X_{i,1}^{t}$ by using T as a variable.

Specifically, in the $T^{th}$ clock cycle, a convolutional parameter of a processing element $PE_{1,2}$ is obtained after a convolutional parameter of a $PE_{1,1}$ in a previous clock cycle is transmitted to the $PE_{1,2}$, and convolutional data of the processing element $PE_{1,2}$ is obtained after convolutional data of a processing element $PE_{2,1}$ in the previous clock cycle is transmitted to the $PE_{1,2}$; a convolutional parameter of a processing element $PE_{2,2}$ is obtained after a convolutional parameter of the $PE_{2,1}$ in the previous clock cycle is transmitted to the $PE_{2,2}$, and convolutional data of the processing element $PE_{2,2}$ is obtained after convolutional data of a processing element $PE_{3,1}$ in the previous clock cycle is transmitted to the $PE_{2,2}$;

a convolutional parameter of a processing element $PE_{A-1,2}$ is obtained after a convolutional parameter of a $PE_{A-1,1}$ in the previous clock cycle is transmitted to the $PE_{A-1,2}$, and convolutional data of the processing element $PE_{A-1,2}$ is obtained after convolutional data of a processing element $PE_{A,1}$ in the previous clock cycle is transmitted to the $PE_{A-1,2}$; and a convolutional parameter and convolutional data of a processing element $PE_{A,2}$ are transmitted by the data cache module 310 to the $PE_{A,2}$;

a convolutional parameter of a processing element $PE_{1,J'}$ is obtained after a convolutional parameter of a $PE_{1,J'-1}$ in the previous clock cycle is transmitted to the $PE_{1,j'}$, and convolutional data of the processing element $PE_{1,J'}$ is obtained after convolutional data of a processing element $PE_{2,J'-1}$ in the previous clock cycle is transmitted to the $PE_{1,J'}$; a convolutional parameter of a processing element $PE_{2,J'}$ is obtained after a convolutional parameter of the $PE_{2,J'-1}$ in the previous clock cycle is transmitted to the $PE_{2,J'}$, and convolutional data of the processing element $PE_{2,J'}$ is obtained after convolutional data of a processing element $PE_{3,J'-1}$ in the previous clock cycle is transmitted to the $PE_{2,J'}$;

a convolutional parameter of a processing element $PE_{A-1,J'}$ is obtained after a convolutional parameter of a $PE_{A-1,J'-1}$ in the previous clock cycle is transmitted to the $PE_{A-1,J'}$, and convolutional data of the processing element $PE_{A-1,J'}$ is obtained after convolutional data of a processing element $PE_{A,J'-1}$ in the previous clock cycle is transmitted to the $PE_{A-1,J'}$; and a convolutional parameter and convolutional data of a processing element $PE_{A,J'}$ are transmitted by the data cache module 310 to the $PE_{A,J'}$.

For a processing element in any column of the first multiplication accumulation window, for example, a processing element in a $J^{th}$ column, a product $X_{1,J}^{nB+J}$ is transmitted to a $PE_{2,J}$, and an addition operation is performed on the product $X_{1,J}^{nB+J}$ and a product $X_{2,J}^{nB+J}$ in an $(nB+J)^{th}$ clock cycle, to obtain a convolutional intermediate result $Q_{1}^{nB+J}$. The product $X_{1,J}^{nB+J}$ is a product obtained after a $PE_{1,J}$ performs a multiplication operation on convolutional data of the $PE_{1,J}$ and a convolutional parameter of the $PE_{1,J}$ in the $(nB+J)^{th}$ clock cycle, and the product $X_{2,J}^{nB+J}$ is a product obtained after the $PE_{2,J}$ performs a multiplication operation on convolutional data of the $PE_{2,J}$ and a convolutional parameter of the $PE_{2,J}$ in the $(nB+J)^{th}$ clock cycle. A convolutional intermediate result $Q_{f-1}^{nB+J}$ obtained after a $PE_{f,J}$ performs an addition operation is transmitted to a $PE_{f+1,J}$, where f is set to an integer each time in ascending order of 2 to A-1 in sequence. An addition operation is performed on the convolutional intermediate result $Q_{f-1}^{nB+J}$ and a product $X_{f+1,J}^{nB+J}$ obtained after the $PE_{f+1,J}$ performs a multiplication operation, to obtain a convolutional intermediate result $Q_{f}^{nB+J}$. A convolutional intermediate result $Q_{A-1}^{nB+J}$ obtained in a $PE_{A,J}$ is transmitted to the output control module 330 for caching. The convolutional intermediate result $Q_{A-1}^{nB+J}$ is transmitted to the $PE_{1,J}$ in an $(nB+J+1)^{th}$ clock cycle, and the convolutional intermediate result $Q_{A-1}^{nB+J}$ is used as an initial accumulation value of an addition operation performed in the $(nB+J+1)^{th}$ clock cycle.

A convolutional intermediate result $Q_A^{nB+J+1}$ obtained in an $((n+1)B+J-1)^{th}$ clock cycle is determined as a $J^{th}$ convolutional result $S_J$.

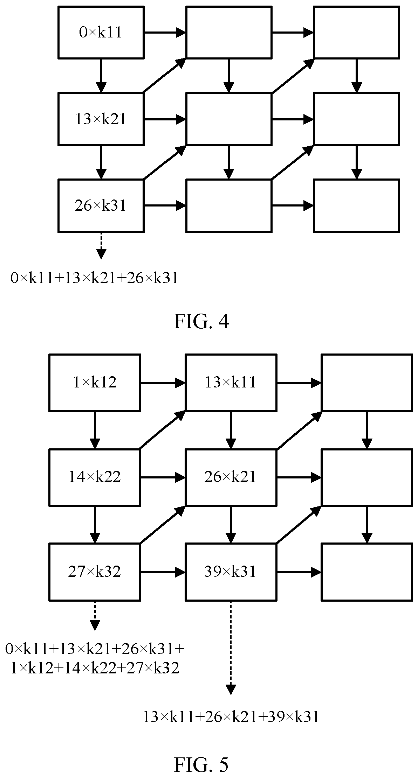

FIG. 4 to FIG. 6 are principle diagrams of a convolution operation process of a convolution operation chip according to an embodiment of this application. It is assumed that the first convolutional data matrix is the following matrix:

$$\begin{bmatrix} 0 & 1 & 2 & 3 & 4 & 5 & 6 & 7 & 8 & 9 & 10 & 11 & 12 \\ 13 & 14 & 15 & 16 & 17 & 18 & 19 & 20 & 21 & 22 & 23 & 24 & 25 \\ 26 & 27 & 28 & 29 & 30 & 31 & 32 & 33 & 34 & 35 & 36 & 37 & 38 \\ 39 & 40 & 41 & 42 & 43 & 44 & 45 & 46 & 47 & 48 & 49 & 50 & 51 \\ 52 & 53 & 54 & 55 & 56 & 57 & 58 & 59 & 60 & 61 & 62 & 63 & 64 \end{bmatrix};$$

and
the first convolutional parameter matrix is the following matrix:

$$\begin{bmatrix} k11 & k12 & k13 \\ k21 & k22 & k23 \\ k31 & k32 & k33 \end{bmatrix}.$$

The M×N multiplication accumulator array 320 is an eight-row eight-column tiling array. In other words, M is equal to 8, and N is equal to 8. It can be seen that the first convolutional data matrix is a five-row thirteen-column matrix, and the first convolutional parameter matrix is a three-row three-column matrix. In this example, A=3, B=3, D=5, E=13, M=8, and N=8.

It can be learned that a size of an obtained convolutional result matrix is three rows and eleven columns after a convolution operation is performed on the three-row three-column first convolutional parameter matrix and the five-row thirteen-column first convolutional data matrix.

The array control module 340 determines a size of the first multiplication accumulation window based on a size of the first convolutional data matrix and a size of a first parameter matrix. Specifically:

If the size of the first convolutional parameter matrix is three rows and three columns, three consecutive rows of processing elements are used as processing elements used for a convolution operation. In other words, a row quantity of the first multiplication accumulation window is determined as A=3. In addition, the first convolutional data matrix includes five rows and thirteen columns. Therefore, a column quantity of the first multiplication accumulation window is determined as C=3 according to a formula C=D-A+1. Therefore, in the eight-row eight-column multiplication accumulator array, the first multiplication accumulation window includes three rows and three columns.

It should be understood that a location of the 3×3 first multiplication accumulation window in the 8×8 multiplication accumulator 320 is not limited, and may be at an edge of the array, or may be in the middle of the array. This is not limited in this embodiment of this application.

After the first convolutional parameter matrix and the first convolutional data matrix are separately input into the data cache module 310, the data cache module 310 caches the foregoing matrices and inputs the foregoing matrices into the first multiplication accumulation window.

The data cache module 310 arranges convolutional parameters in the first convolutional parameter matrix in a sequence of clock cycles.

The data cache module 310 arranges, in the sequence of clock cycles, convolutional parameters in a first row of the first convolutional parameter matrix as follows: k11, k12, k13, k11, k12, k13, k11, ...;

the data cache module 310 arranges, in the sequence of clock cycles, convolutional parameters in the first row of the first convolutional parameter matrix as follows: k21, k22, k23, k21, k22, k23, k21, ...; and

the data cache module 310 arranges, in the sequence of clock cycles, convolutional parameters in the first row of the first convolutional parameter matrix as follows: k31, k32, k33, k31, k32, k33, k31, ....

In other words, convolutional parameters of processing elements in a first column and first to third rows of the first multiplication accumulation window are respectively k11, k21, and k31 in a first clock cycle; the convolutional parameters of the processing elements in the first column and the first to third rows of the first multiplication accumulation window are respectively k12, k22, and k32 in a second clock cycle; the convolutional parameters of the processing elements in the first column and first to third rows of the first multiplication accumulation window are respectively k13, k23, and k33 in a third clock cycle;

The data cache module 310 arranges convolutional data in the first convolutional data matrix in the sequence of clock cycles:

The data cache module 310 arranges, in the sequence of clock cycles, convolutional data in a first row of the first convolutional data matrix as follows: 0, 1, 2, 1, 2, 3, 2, 3, 4, 3, 4, ...;

the data cache module 310 arranges, in the sequence of clock cycles, convolutional data in a second row of the first convolutional data matrix as follows: 13, 14, 15, 14, 15, 16, 15, 16, 17, 16, 17, ...;

the data cache module 310 arranges, in the sequence of clock cycles, convolutional data in a third row of the first convolutional data matrix as follows: 26, 27, 28, 27, 28, 29, 28, 29, 30, 29, 30, ...;

the data cache module 310 arranges, in the sequence of clock cycles, convolutional data in a fourth row of the first convolutional data matrix as follows: 39, 40, 41, 40, 41, 42, 41, 42, 43, 42, 43, ...; and

the data cache module 310 arranges, in the sequence of clock cycles, convolutional data in a fifth row of the first convolutional data matrix as follows: 52, 53, 54, 53, 54, 55, 54, 55, 56, 56, 57, ....

In other words, convolutional data of the processing elements in the first column and the first to third rows of the first multiplication accumulation window is respectively 0, 13, and 26 in the first clock cycle; convolutional data of the processing elements in the first column and the first to third rows of the first multiplication accumulation window is respectively 1, 14, and 27 in the second clock cycle; and convolutional data of the processing elements in the first column and the first to third rows of the first multiplication accumulation window is respectively 2, 15, and 28 in the third clock cycle.

FIG. 4 is a principle diagram of an operation process of a convolution operation chip in a first clock cycle according to an embodiment of this application. As shown in FIG. 4, a multiplication operation is performed on convolutional data and convolutional parameters of processing elements $PE_{i,1}$ (values of i are separately 1, 2, and 3) in a first column in the first clock cycle, and obtained multiplication results are respectively $X_{1,1}^1 = 0 \times k11$, $X_{2,1}^1 = 13 \times k21$, and $X_{3,1}^1 = 26 \times k31$, where $X_{1,1}^1$, $X_{2,1}^1$, and $X_{3,1}^1$ are respectively multiplication results of processing elements $PE_{1,1}$, $PE_{2,1}$, and $PE_{3,1}$ in the first clock cycle. $X_{1,1}^1$ is transmitted to the processing element $PE_{2,1}$ by using a data channel, and is added to $X_{2,1}^1$, to obtain a convolutional intermediate result $Q_{1(1)}^1 = 0 \times k11 + 13 \times k21$.

An obtained convolutional intermediate result $Q_{1(1)}^1$ is transmitted to the processing element $PE_{3,1}$ by using a data channel, and is added to $X_{3,1}^1$, to obtain a convolutional intermediate result $Q_{2(1)}^1 = 0 \times k11 + 13 \times k21 + 26 \times k31$; and the convolutional intermediate result $Q_{2(1)}^1$ is transmitted to an output control module 330 for caching.

After the convolution operation is performed on the convolutional data and the convolutional parameters of the processing elements $PE_{i,1}$ (the values of i are separately 1, 2, and 3) in the first column in the first clock cycle, the convolutional data and the convolutional parameters of the processing element $PE_{i,1}$ in the first column are separately transmitted to another processing element by using different data channels. The convolutional parameters of the processing elements $PE_{i,1}$ (the values of i are separately 1, 2, and 3) in the first column are respectively transmitted to corresponding locations in processing elements $PE_{i,2}$ (the values of i are separately 1, 2, and 3) in a second column by using data channels. To be specific, a convolutional parameter k11 of a $PE_{1,1}$ is transmitted to a $PE_{1,2}$, a convolutional parameter k21 of a $PE_{2,1}$ is transmitted to a $PE_{2,2}$, and a convolutional parameter k31 of a $PE_{3,1}$ is transmitted to a $PE_{3,2}$. The convolutional parameter k11, the convolutional parameter k21, and the convolutional parameter k31 are respectively used as multipliers of convolution operations performed by the $PE_{1,2}$, the $PE_{2,2}$, and the $PE_{3,2}$ in a next clock cycle. In addition, the convolutional data of the processing elements $PE_{i,1}$ (the values of i are separately 1, 2, and 3) in the first column is respectively transmitted to corresponding locations in the processing elements in the second column by using different data channels. To be specific, convolutional data 13 of the $PE_{2,1}$ is transmitted to the $PE_{1,2}$, convolutional data 26 of the $PE_{3,1}$ is transmitted to the $PE_{2,2}$, the data cache module transmits convolutional data 39 to the $PE_{3,2}$ by using a data channel, and the convolutional data 13, the convolutional data 26, and the convolutional data 39 are respectively used as other multipliers of the convolution operations performed by the $PE_{1,2}$, the $PE_{2,2}$, and the $PE_{3,2}$ in the next clock cycle.

It should be understood that convolutional data 0 of the processing element $PE_{1,1}$ is transmitted to the first multiplication accumulation window, and is not used for a subsequent convolution operation.

FIG. 5 is a principle diagram of an operation process of a convolution operation chip in a second clock cycle according to an embodiment of this application. As shown in FIG. 5, in the second clock cycle, a multiplication operation is performed, in the processing elements $PE_{i,1}$ (the values of i are separately 1, 2, and 3) in the first column by using the foregoing method, on convolutional data and a convolutional parameter that are input by the data cache module 310, to obtain multiplication results $X_{1,1}^2$, $X_{2,1}^2$, and $X_{3,1}^2$ that are respectively 1×k12, 14×k22, and 27×k32.

A convolutional intermediate result $Q_{2(1)}^1$ cached in the output control module 330 is transmitted to the processing element $PE_{1,1}$ in this clock cycle, and is added to $X_{1,1}^2$, to obtain a convolutional intermediate result

$$Q_{1(1)}^2 = 0×k11+13×k21+26×k31+1×k12.$$

Likewise, a convolutional intermediate result $Q_{1(1)}^2$ of the first column is transmitted to the $PE_{2,1}$, and is added to $X_{2,1}^2$, to obtain a convolutional intermediate result $Q_{2(1)}^2$; the convolutional intermediate result $Q_{2(1)}^2$ is transmitted to the $PE_{3,1}$, and is added to $X_{3,1}^2$, to obtain a convolutional intermediate result

$$Q_{3(1)}^2 = 0×k11+13×k21+26×k31+1×k12+14×k22+27×k32;$$ and the convolutional intermediate result

$Q_{3(1)}^2$ is transmitted to the output control module for caching.

In addition, the processing elements $PE_{i,2}$ (the values of i are separately 1, 2, and 3) in the second column start performing a convolution operation in the second clock cycle, and a process is similar to an operation process of the processing elements in the first column, and details are not described in herein. In this clock cycle, the processing elements $PE_{i,2}$ (the values of i are separately 1, 2, and 3) in the second column output a convolutional intermediate

result $Q_{2(2)}^2 = 13×k11+26×k21+39×k31,$ and transmit the convolutional intermediate result $Q_{2(2)}^2$ to the output control module 330 for caching.

After the convolution operation is performed on convolutional data and convolutional parameters of the processing elements $PE_{i,2}$ (the values of i are separately 1, 2, and 3) in the second column, the convolutional data and the convolutional parameters are transmitted to another processing element by using different data channels. The convolutional parameters of the processing elements $PE_{i,2}$ (the values of i are separately 2, 2, and 3) in the second column are respectively transmitted to corresponding locations in processing elements $PE_{i,3}$ (the values of i are separately 1, 2, and 3) in a third column by using data channels. To be specific, a convolutional parameter k11 of the $PE_{1,2}$ is transmitted to the $PE_{1,3}$, a convolutional parameter k21 of the $PE_{2,2}$ is transmitted to the $PE_{2,3}$, a convolutional parameter k31 of the $PE_{3,2}$ is transmitted to the $PE_{3,3}$, and the convolutional parameter k11, the convolutional parameter k21, and the convolutional parameter k31 are respectively used as multipliers of convolution operations performed by the $PE_{1,3}$, the $PE_{2,3}$, and the $PE_{3,3}$ in a next clock cycle. In addition, the convolutional data of the processing elements $PE_{i,2}$ (the values of i are separately 1, 2, and 3) in the second column is respectively transmitted to corresponding locations in the processing elements in the third column by using different data channels. To be specific, convolutional data 26 of the $PE_{2,2}$ is transmitted to the $PE_{1,3}$, convolutional data 39 of the $PE_{3,2}$ is transmitted to the $PE_{2,3}$, the data cache module 310 transmits convolutional data 52 to the $PE_{3,3}$ by using a data channel, and the convolutional data 26, the convolutional data 39, and the convolutional data 52 are respectively used as other multipliers of the convolution operations performed by the $PE_{1,3}$, the $PE_{2,3}$, and the $PE_{3,3}$ in the next clock cycle.

It should be understood that the convolutional data 13 of the processing element $PE_{1,2}$ is transmitted to the first multiplication accumulation window, and is not used for a subsequent convolution operation.

In addition, after the convolution operation is performed on the convolutional data and the convolutional parameters of the processing elements $PE_{i,1}$ (the values of i are separately 1, 2, and 3) in the first column in the second clock cycle, the convolutional data and the convolutional parameters are transmitted to the processing elements in the second column by using different data channels in a manner similar to the foregoing manner.

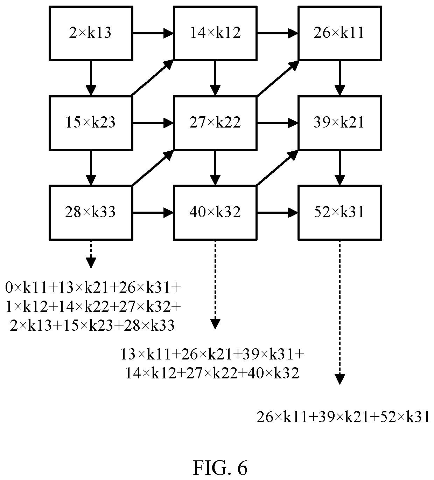

FIG. 6 is a principle diagram of an operation process of a convolution operation chip in a third clock cycle according to an embodiment of this application. As shown in FIG. 6, in the third clock cycle, a multiplication operation is performed, in the processing elements $PE_{i,1}$ (the values of i are separately 1, 2, and 3) in the first column by using the foregoing method, on convolutional data and a convolutional parameter input by the data cache module 310, to obtain multiplication results $X^3_{1,1}$, $X^3_{2,1}$, and $X^3_{3,1}$ that are respectively 2×k13, 15×k23, and 28×k33. A convolutional intermediate result $Q^2_{3(1)}$ cached in the output control module 330 is transmitted to the processing element $PE_{1,1}$, and is added to $X^3_{1,1}$, to obtain a convolutional intermediate result

$$Q^3_{1(1)} = 0×k11+13×k21+26×k31+1×k12+14×k22+27×k32+2×k13.$$ The convolutional intermediate result $Q^3_{1(1)}$ of the first column is transmitted to the $PE_{2,1}$, and is added to $X^3_{2,1}$, to obtain a convolutional intermediate result $Q^3_{2(1)}$. The convolutional intermediate result $Q^3_{2(1)}$ is transmitted to the $PE_{3,1}$, and is added to $X^3_{3,1}$, to obtain a convolutional intermediate result

$$Q^3_{3(1)} = 0×k11+13×k21+26×k31+1×k12+14×k22+27×k32+2×k13+15×k23+28×k33.$$

The convolutional intermediate result $Q^3_{3(1)}$ output by the processing element in the first column in the third clock cycle after a convolution operation is a first convolutional result, and the first convolutional result is output as an element in a first row and a first column of the convolutional result matrix.

Likewise, the processing elements $PE_{i,2}$ (the values of i are separately 1, 2, and 3) in the second column receive, in the third clock cycle, convolutional parameters k12, k22, and k32 transmitted by the processing elements $PE_{i,1}$ (the values of i are separately 1, 2, and 3) in the first column. The processing elements $PE_{i,2}$ (i=1 and 2) in the second column receive, in the third clock cycle, convolutional data 14 and 27 transmitted by the processing elements $PE_{i,1}$ (i=2 and 3) in the first column. The processing element $PE_{3,2}$ in the second column receives convolutional data 40 from the data cache module. A convolutional intermediate result

$$Q^3_{3(2)} = 13×k11+26×k21+39×k31+14×k12+27×k22+40×k32$$ is obtained after a similar operation process. The processing elements $PE_{i,3}$ (i=1, 2, and 3) in the third column start performing a convolution operation in the third clock cycle. The processing elements $PE_{i,3}$ (the values of i are separately 1, 2, and 3) in the third column receive, in the third clock cycle, the convolutional data k11, k21, and k31 transmitted by the processing elements $PE_{i,2}$ (the values of i are separately 1, 2, and 3) in the second column. The processing elements $PE_{i,3}$ (*i*=1 and 2) in the third column receive, in the third clock cycle, convolutional data 26 and 39 transmitted by the processing elements $PE_{i,2}$ (*i*=2 and 3) in the second column. The processing element $PE_{3,3}$ in the third column receives convolutional data 52 from the data cache module 310. A convolutional intermediate result output after a similar operation process is

$$Q_{2(3)}^{3} = 26 \times k11 + 39 \times k21 + 52 \times k31.$$

Similarly, in a fourth clock cycle, convolutional parameters received by processing elements $PE_{1,1}$ to $PE_{3,1}$ in the first column from the data cache module 310 are respectively k11, k21, and k31; and convolutional data received by the $PE_{1,1}$ to the $PE_{3,1}$ is respectively 1, 14, and 27. A convolutional intermediate result $Q_{2(1)}^{4}$ is output after a convolution operation.

The processing elements $PE_{i,2}$ (*i*=1 and 2) in the second column receive convolutional data 15 and 28 transmitted by the processing elements $PE_{i,1}$ (i=2 and 3) in the first column, the processing element $PE_{3,2}$ in the second column receives convolutional data 41 transmitted by the data cache module 310, and the processing elements $PE_{i,2}$ (the values of i are separately 1, 2, and 3) in the second column receive convolutional parameters k13, k23, and k33 transmitted by the processing elements $PE_{i,1}$ (i=1, 2, and 3) in the first column. A convolutional intermediate result

$$Q_{3(2)}^{4} = 13 \times k11 + 26 \times k21 + 39 \times k31 + 14 \times k12 + 27 \times k22 + 40 \times k32 + 15 \times k13 + 28 \times k23 + 41 \times k33 \quad \text{is output after a similar convolution operation process.}$$

The convolutional intermediate result $Q_{3(2)}^{4}$ output by the processing element in the second column in the fourth clock cycle after the convolution operation is a second convolutional result, and the second convolutional result is output as an element in a second row and a first column of the convolutional result matrix.

The processing elements $PE_{i,3}$ (the values of i are separately 1, 2, and 3) in the third column receive, in the third clock cycle, the convolutional parameters k12, k22, and k32 transmitted by the processing elements $PE_{i,2}$ (the values of i are separately 1, 2, and 3) in the second column. The processing elements $PE_{i,2}$ (*i*=1 and 2) in the third column receive, in the fourth clock cycle, convolutional data 27 and 40 transmitted by the processing elements $PE_{i,1}$ (*i*=2 and 3) in the second column. The processing element $PE_{3,3}$ in the third column receives convolutional data 53 from the data cache module 310. A convolutional intermediate result

$$Q_{3(3)}^{4} = 26 \times k11 + 39 \times k21 + 52 \times k31 + 27 \times k12 + 40 \times k22 + 53 \times k32 \quad \text{is obtained after a similar operation process.}$$

Similarly, in a fifth clock cycle, convolutional parameters received by the processing elements $PE_{1,1}$ to $PE_{3,1}$ in the first column from the data cache module 310 are respectively k12, k22, and k32; and convolutional data received by the $PE_{1,1}$ to the $PE_{3,1}$ is respectively 2, 15, and 28. A convolutional intermediate result $Q_{2(1)}^{5}$ is output after a convolution operation.

The processing elements $PE_{i,2}$ (*i*=1 and 2) in the second column receive convolutional data 14 and 27 transmitted by the processing elements $PE_{i,1}$ (i=2 and 3) in the first column, the processing element $PE_{3,2}$ in the second column receives convolutional data 40 transmitted by the data cache module 310, and the processing elements $PE_{i,2}$ (the values of i are separately 1, 2, and 3) in the second column receive the convolutional parameters k11, k21, and k31 transmitted by the processing elements $PE_{i,1}$, (i=1, 2, and 3) in the first column. A convolutional intermediate result

$$Q_{3(2)}^{4} = 14 \times k11 + 27 \times k21 + 40 \times k31 \quad \text{is output after a similar convolution operation process.}$$

The processing elements $PE_{i,3}$ (the values of i are separately 1, 2, and 3) in the third column receive, in the fifth clock cycle, the convolutional parameters k13, k23, and k33 transmitted by the processing elements $PE_{i,2}$ (i=1, 2, and 3) in the second column. The processing elements PE$_{i,2}$ (*i*=1 and 2) in the third column receive, in the fifth clock cycle, convolutional data 28 and 41 transmitted by the processing elements PE$_{i,1}$ (*i*=2 and 3) in the second column. The processing element PE$_{3,3}$ in the third column receives convolutional data 54 from the data cache module 310. A convolutional intermediate result

$$Q^5_{3(3)} = 26 \times k11 + 39 \times k21 + 52 \times k31 + 27 \times k12 + 40 \times k22 + 53 \times k32 + 28 \times k13 + 41 \times k23 + 54 \times k33$$ is obtained after a similar operation process.

The convolutional intermediate result $Q^5_{3(3)}$ output by the processing element in the third column in the fifth clock cycle after the convolution operation is a third convolutional result, and the third convolutional result is output as an element in a third row and a first column of the convolutional result matrix.

Therefore, the processing element in the first column outputs the first convolutional result after performing the convolution operation in the first to third clock cycles, and the first convolutional result is used as the element in the first row and the first column of the convolutional result matrix; the processing element in the second column outputs the second convolutional result after performing the convolution operation in the second to fourth clock cycles, and the second convolutional result is used as the element in the second row and the first column of the convolutional result matrix; and the processing element in the third column outputs the third convolutional result after performing the convolution operation in the third to fifth clock cycles, and the third convolutional result is used as the element in the third row and the first column of the convolutional result matrix.

According to the convolution operation chip in this embodiment of this application, a data transmission channel is added to any processing element, so that convolutional data and a convolutional parameter can be directly transmitted between adjacent processing elements. In addition, the data is in the first multiplication accumulation window in an entire transmission process, and does not pass through a RAM, so that a quantity of times of accessing the RAM can be reduced, and power consumption can be reduced.

It should be understood that the convolutional result may alternatively be obtained in another manner. For example, in the processing elements in the first column, multiplication operations are separately performed in the first clock cycle, to obtain $X^1_{1,1}$, $X^1_{2,1}$, and $X^1_{3,1}$, and the foregoing multiplication results are output to the output control module for caching; multiplication operations are separately performed in the second clock cycle, to obtain $X^2_{1,1}$, $X^2_{2,1}$, and $X^2_{3,1}$, and the foregoing multiplication results are output to the output control module for caching; and multiplication operations are separately performed in the third clock cycle, to obtain $X^3_{1,1}$, $X^3_{2,1}$, and $X^3_{3,1}$, an addition operation is performed in the processing element PE$_{3,1}$ in the third clock cycle, and $\sum_{T=1}^{3}\sum_{i=1}^{3} X^T_{i,1}$ is output as a convolutional result. For another example, in the processing elements in the first column, multiplication operations are separately performed in the first clock cycle, to obtain $X^1_{1,1}$, $X^1_{2,1}$, and $X^1_{3,1}$, and the foregoing multiplication results are output to the output control module for caching; multiplication operations are separately performed in the second clock cycle, to obtain $X^2_{1,1}$, $X^2_{2,1}$, and $X^2_{3,1}$, $X^1_{1,1}$, $X^1_{2,1}$, $X^1_{3,1}$ cached in the output control module are respectively transmitted to the PE$_{1,1}$, the PE$_{2,1}$, and the PE$_{3,1}$, and are respectively added to $X^2_{1,1}$, $X^2_{2,1}$, and $X^2_{3,1}$, so that a convolutional intermediate result $X^1_{1,1} + X^2_{1,1}$ is obtained in the PE$_{1,1}$, a convolutional intermediate result $X^1_{2,1} + X^2_{2,1}$ is obtained in the PE$_{2,1}$, and a convolutional intermediate result $X^1_{3,1} + X^2_{3,1}$ is obtained in the PE$_{3,1}$, and the foregoing convolutional intermediate results are separately transmitted to the output control module for caching; multiplication operations are performed in the third clock cycle, to obtain $X^3_{1,1}$, $X^3_{2,1}$, and $X^3_{3,1}$, the convolutional intermediate results cached in the output control module are respectively transmitted to the PE$_{1,1}$, the PE$_{2,1}$, and the PE$_{3,1}$, and are respectively added to $X^3_{1,1}$, $X^3_{2,1}$, and $X^3_{3,1}$, to obtain a convolutional intermediate result $X^1_{1,1} + X^2_{1,1} + X^3_{1,1}$ in the PE$_{1,1}$, obtain a convolutional intermediate result $X^1_{2,1} + X^2_{2,1} + X^3_{2,1}$ in the PE$_{2,1}$, and obtain a convolutional intermediate result $X^1_{3,1} + X^2_{3,1} + X^3_{3,1}$ in the PE$_{3,1}$, an addition operation is performed, in the PE$_{3,1}$, on the convolutional intermediate results obtained in the third clock cycle, and a final addition result $\sum_{T=1}^{3}\sum_{i=1}^{3} X^T_{i,1}$ is output as a convolutional result.

It should be understood that a register may be disposed on a data channel between any two processing elements in the first multiplication accumulation window. Registers may be classified into a first register, a second register, and a third register. The first register is disposed between the processing element PE$_{X,Y+1}$ and the processing element PE$_{X,Y}$, and is configured to store and transmit the convolutional parameter of the processing element PE$_{X,Y}$; the second register is disposed between the processing element $PE_{X,Y+1}$ and a processing element PE$_{X+1,Y}$, and is configured to store and transmit convolutional data of the processing element PE$_{X+1,Y}$; and the third register is disposed between the processing element $PE_{X,Y+1}$ and a processing element PE$_{X+1,Y+1}$, and is configured to store and transmit a convolutional intermediate result, where X is an integer greater than or equal to 2 and less than or equal to A, and Y is an integer greater than or equal to 1 and less than or equal to C-1.

Specifically, after a convolution operation is performed on a convolutional parameter and the convolutional data of the processing element PE$_{X+1,Y}$ in a clock cycle, the convolutional parameter of the processing element PE$_{X+1,Y}$ (excluding a processing element in a last column) is transmitted to the first register for storage by using a data channel, and is used for a convolution operation performed by the processing element PE$_{X+1,Y+1}$ in a next clock cycle. The convolutional data of the processing element PE$_{X+1,Y}$ (excluding a processing element in a first row or a last column) is transmitted to the second register for storage by using a data channel, and is used for a convolution operation performed by the processing element PE$_{X,Y+1}$ in a next clock cycle. Likewise, after a convolution operation is performed on the convolutional parameter and convolutional data of the processing element PE$_{X,Y}$ in a clock cycle, the convolutional parameter of the processing element PE$_{X,Y}$ (excluding a processing element in a last column) is transmitted to the first register for storage by using a data channel, and is used for a convolution operation performed by the processing element PE$_{X,Y+1}$ in a next clock cycle. The convolutional data of the processing element PE$_{X,Y}$ (excluding a processing element in a first row or a last column) is transmitted to the second register for storage by using a data channel, and is used for a convolution operation performed by a processing element $PE_{X-1,Y+1}$ in a next clock cycle. After the processing element PE$_{X,Y}$ performs a multiplication operation, a multiplication result or a convolutional intermediate result is stored in a third register between the processing element PE$_{X,Y}$ and the processing element PE$_{X+1,Y}$, so that the multiplication result or the convolutional intermediate result obtained in the processing element PE$_{X,Y}$ can be rhythmically aligned with a multiplication result of the processing element $PE_{X+1,Y}$.

In other words, the first register between the processing element PE$_{X,Y+1}$ and the processing element PE$_{X,Y}$ is configured to store the convolutional parameter transmitted by the processing element PE$_{X,Y}$, and the second register between the processing element $PE_{X,Y+1}$ and the processing element PE$_{X+1,Y}$ is configured to store the convolutional data transmitted by the processing element PE$_{X+1,Y}$. The first register and the second register are further configured to rhythmically align, when the processing element PE$_{X,Y+1}$ performs a multiplication operation, the convolutional parameter transmitted by the processing element PE$_{X,Y}$ and the convolutional data transmitted by the processing element PE$_{X+1,Y}$, to ensure that a convolution operation can be performed on the convolutional parameter and the convolutional data in a next clock cycle.

Therefore, a register is disposed on a data channel between processing elements, so that convolutional data and a convolutional parameter can be rhythmically aligned when any processing element performs a convolution operation, and the convolution operation can be successfully performed. In addition, convolutional data and a convolutional parameter of a processing element other than the processing element in the first column are transmitted on a data channel between adjacent processing elements, without a need to occupy an external bus. Therefore, external transmission bandwidth can be reduced.

It should be understood that, in addition to the first multiplication accumulation window, the M-row N-column multiplication accumulator array may also include a second multiplication accumulation window, and there is no common processing element between the first multiplication accumulation window and the second multiplication accumulation window. In other words, a plurality of different convolution operations may be simultaneously performed in the multiplication accumulator array.

When the first convolutional data matrix is the same as a second convolutional data matrix, and the first convolutional parameter matrix is different from a second convolutional parameter matrix, the second convolutional data matrix is a convolutional data matrix to which convolutional data transmitted by the data cache module 310 to the second multiplication accumulation window belongs, and the second convolutional parameter matrix is a convolutional parameter matrix to which a convolutional parameter transmitted by the data cache module 310 to the second multiplication accumulation window belongs. For example, the second convolutional parameter matrix is:

$$\begin{bmatrix} r11 & r12 & r13 & r14 \\ r21 & r22 & r23 & r24 \end{bmatrix}.$$

The first convolutional data matrix includes five rows and thirteen columns. Neither an element quantity nor an element value of the second convolutional parameter matrix is the same as an element quantity or an element value of the first convolutional parameter matrix. When a convolution operation is performed on the second convolutional parameter matrix and the second convolutional data matrix in the multiplication accumulator, the determined second multiplication accumulation window includes two rows and four columns, and an obtained convolutional result matrix includes four rows and nine columns.

When the first convolutional data matrix is different from a second convolutional data matrix, and the first convolutional parameter matrix is the same as a second convolutional parameter matrix, the second convolutional data matrix is a convolutional data matrix to which convolutional data transmitted by the data cache module 310 to the second multiplication accumulation window belongs, and the second convolutional parameter matrix is a convolutional parameter matrix to which a convolutional parameter transmitted by the data cache module 310 to the second multiplication accumulation window belongs. For example, the second convolutional data matrix is:

$$\begin{bmatrix} 0 & 1 & 2 & 3 & 4 & 5 & 6 & 7 & 8 & 9 & 10 & 11 & 12 \\ 13 & 14 & 15 & 16 & 17 & 18 & 19 & 20 & 21 & 22 & 23 & 24 & 25 \\ 26 & 27 & 28 & 29 & 30 & 31 & 32 & 33 & 34 & 35 & 36 & 37 & 38 \\ 39 & 40 & 41 & 42 & 43 & 44 & 45 & 46 & 47 & 48 & 49 & 50 & 51 \\ 52 & 53 & 54 & 55 & 56 & 57 & 58 & 59 & 60 & 61 & 62 & 63 & 64 \\ 65 & 66 & 67 & 68 & 69 & 70 & 71 & 72 & 73 & 74 & 75 & 76 & 77 \end{bmatrix}.$$

The first convolutional parameter matrix includes three rows and three columns. Neither an element quantity nor an element value of the second convolutional data matrix is the same as an element quantity or an element value of the first convolutional data matrix. When a convolution operation is performed on the second convolutional parameter matrix and the second convolutional data matrix in the multiplication accumulator, the determined second multiplication accumulation window includes three rows and four columns, and an obtained convolutional result matrix includes four rows and eleven columns.

It should be understood that the M-row N-column multiplication accumulator array may simultaneously include a plurality of first multiplication accumulation windows and a plurality of second multiplication accumulation windows. This is not limited herein in this application.

Certainly, convolution operations on different convolutional data matrices and different convolutional parameter matrices may be simultaneously performed in the M-row N-column multiplication accumulator array, and each multiplication accumulation window used for a convolution operation is independent of the first multiplication accumulation window and the second multiplication accumulation window.

Therefore, a size of a multiplication accumulation window is flexibly set, so that a plurality of different convolution operations may be simultaneously performed in a same multiplication accumulator array, and array utilization is improved.

It should be understood that an actual product type SoC usually includes four multiplication accumulator arrays in this embodiment of this application, each multiplication accumulator array includes 15 rows and 14 columns, and the four multiplication accumulator arrays may be mutually associated or mutually independent.

It should be understood that in the embodiments of this application, "B corresponding to A" indicates that B is associated with A, and B may be determined based on A. However, it should further be understood that determining B based on A does not mean that B is determined based on A only; that is, B may also be determined based on A and/or other information.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the embodiments disclosed in this specification, method steps and elements may be implemented by electronic hardware, computer software, or a combination thereof. To clearly describe interchangeability between the hardware and the software, the foregoing has generally described steps and compositions of each embodiment according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The method or step described in the embodiments disclosed in this specification may be implemented by hardware, software program executed by the processor, or combination of hardware and software program. The software program may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

This application is described in detail with reference to the accompanying drawings and in combination with the preferred embodiments, but this application is not limited thereto. Various equivalent modifications or replacements can be made to the embodiments of this application by a person of ordinary skill in the art without departing from the spirit and essence of this application, and the modifications or replacements shall fall within the scope of this application.

**Claims**

1. A convolution operation chip, comprising a data cache module, an M×N multiplication accumulator array, and an output control module, wherein

   the data cache module is configured to transmit a plurality of pieces of convolutional data and a plurality of convolutional parameters used for a convolution operation to a first multiplication accumulation window in the M×N multiplication accumulator array, wherein the plurality of convolutional parameters are determined by the data cache module based on a first convolutional parameter matrix, the plurality of pieces of convolutional data are determined by the data cache module based on a first convolutional data matrix, the first convolutional parameter matrix comprises A rows and B columns, the first convolutional data matrix comprises D rows and E columns, the first multiplication accumulation window comprises A rows and C columns, A is an integer greater than or equal to 2, B and C are each an integer greater than or equal to 1, D is a positive integer greater than or equal to A, E is an integer greater than or equal to max (B, C), M is a positive integer greater than or equal to A, and N is a positive integer greater than or equal to C;

   the first multiplication accumulation window comprises A×C processing elements, wherein a processing element in an $i^{th}$ row and a $j^{th}$ column is marked as $PE_{i,j}$, i is set to an integer each time in ascending order of 1 to A in sequence, and corresponding to each value of i, j is set to an integer each time in ascending order of 1 to C in sequence; a processing element $PE_{X,Y}$ of the first multiplication accumulation window is configured to perform a multiplication operation on convolutional data of the $PE_{X,Y}$ and a convolutional parameter of the $PE_{X,Y}$; and when C is greater than or equal to 2, the processing element $PE_{X,Y}$ is further configured to: transmit the convolutional parameter of the $PE_{X,Y}$ to a $PE_{X,Y+1}$, transmit the convolutional data of the $PE_{X,Y}$ to a $PE_{X-1,Y+1}$, and respectively use the convolutional parameter of the $PE_{X,Y}$ and the convolutional data of the $PE_{X,Y}$ as multipliers of multiplication operations performed by the $PE_{X,Y+1}$ and the $PE_{X-1,Y+1}$, wherein X is an integer greater than or equal to 2 and less than or equal to A, Y is an integer greater than or equal to 1 and less than or equal to C-1, the convolutional data of the $PE_{X,Y}$ is one of the plurality of pieces of convolutional data transmitted by the data cache module, and the convolutional parameter of the $PE_{X,Y}$ is one of the plurality of convolutional parameters transmitted by the data cache module;

   the first multiplication accumulation window is configured to perform an addition operation on a product obtained after a $PE_{i,J}$ performs a multiplication operation, to obtain a convolutional result, wherein J is an integer greater than or equal to 1 and less than or equal to C; and

   the output control module is configured to output the convolutional result.

**2.** The convolution operation chip according to claim 1, wherein the convolution operation chip further comprises: an array control module, configured to: determine the first multiplication accumulation window used for the convolution operation from the M×N multiplication accumulator array, determine a row quantity of the first multiplication accumulation window based on a row quantity of the first convolutional parameter matrix, and determine a column quantity of the first multiplication accumulation window based on the row quantity of the first convolutional parameter matrix and a row quantity of the first convolutional data matrix.

**3.** The convolution operation chip according to claim 2, wherein the array control module specifically determines the column quantity of the first multiplication accumulation window according to the following formula:

$$C = D - A + 1.$$

**4.** The convolution operation chip according to any one of claims 1 to 3, wherein the first multiplication accumulation window is specifically configured to:

perform a multiplication operation on convolutional data of a processing element $PE_{x,1}$ in a first column and a convolutional parameter of the $PE_{i,1}$ in a $t^{th}$ clock cycle, to obtain a product $X^{t}_{i,1}$, wherein the convolutional data of the $PE_{i,1}$ and the convolutional parameter of the $PE_{i,1}$ are transmitted by the data cache module to the $PE_{i,1}$;

transmit a convolutional parameter of a $PE_{x,1}$ to a $PE_{x,2}$, transmit convolutional data of the $PE_{x,1}$ to a $PE_{x-1,2}$, and respectively use the convolutional parameter of the $PE_{x,1}$ and the convolutional data of the $PE_{x,1}$ as multipliers of multiplication operations performed by the $PE_{x,2}$ and the $PE_{x-1,2}$ in a $(t+1)^{th}$ clock cycle, wherein x is set to an integer each time in ascending order of 2 to A in sequence; and

when t is set to each integer in a range [nB+1, nB+B], perform, by using the following formula, an addition operation on all products $X^{t}_{i,1}$ corresponding to all values of t, to obtain a convolutional result $S_1$:

$$S_1 = \sum_{t=nB+1}^{nB+B} \sum_{i=1}^{A} X^{t}_{i,1},$$

wherein
n is an integer greater than or equal to 0 and less than or equal to (E-B).

**5.** The convolution operation chip according to claim 3 or 4, wherein when C is greater than or equal to 2, the first multiplication accumulation window is further specifically configured to:

perform a multiplication operation on convolutional data of a processing element $PE_{i,J'}$ in a $(J')^{th}$ column and a convolutional parameter of the $PE_{i,J'}$ in a $T^{th}$ clock cycle, to obtain a product $X^{T}_{i,J'}$, wherein J' is an integer greater than or equal to 2 and less than or equal to C, the convolutional parameter of the $PE_{i,J'}$ is obtained after convolutional data of a $PE_{i,J'-1}$ is transmitted to the $PE_{i,J'}$, convolutional data of a $PE_{h,J'}$ is obtained after convolutional data of a $PE_{h+1,J'-1}$ is transmitted to the $PE_{h,J'}$, a convolutional parameter of a $PE_{A,J'}$ and convolutional data of the $PE_{A,J'}$ are transmitted by the data cache module to the $PE_{A,J'}$, and h is set to an integer each time in ascending order of 1 to A-1 in sequence; and

when T is set to each integer in a range [nB+J', nB+J'+B-1], perform, by using the following formula, an addition operation on all products $X^{T}_{i,J'}$ corresponding to all values of T, to obtain a convolutional result $S_{J'}$:

$$S_{J'} = \sum_{T=nB+J'}^{nB+J'+B-1} \sum_{i=1}^{A} X_{i,J'}^{T} ,$$

wherein
n is an integer greater than or equal to 0 and less than or equal to (E-B).

6. The convolution operation chip according to claim 5, wherein the D×E convolutional data matrix comprises D×E pieces of convolutional data $a_{p,q}$, p is set to an integer each time in ascending order of 1 to D in sequence, and corresponding to each value of p, q is set to an integer each time in ascending order of 1 to E in sequence; the A×B convolutional parameter matrix comprises A×B convolutional parameters $b_{p',q'}$, p' is set to an integer each time in ascending order of 1 to A in sequence, and corresponding to each value of p', q' is set to an integer each time in ascending order of 1 to B in sequence; and the data cache module comprises:

   a cache, configured to cache the D×E pieces of convolutional data and the A×B convolutional parameters; and
   a counter, configured to determine, in an $(nB+P)^{th}$ clock cycle, that the convolutional data of the $PE_{i,1}$ is $a_{i,n+P}$, and the convolutional parameter of the $PE_{i,1}$ is $b_{i,P}$, wherein a value of P is an integer greater than or equal to 1 and less than or equal to B; and
   the counter is further configured to determine, in an $(nB+J'+Z-1)^{th}$ clock cycle, that the convolutional data of the $PE_{A,J'}$ is $a_{A+J'-1,n+Z}$, and the convolutional parameter of the $PE_{A,J'}$ is $b_{A,Z}$, wherein a value of Z is an integer greater than or equal to 1 and less than or equal to B.

7. The convolution operation chip according to any one of claims 1 to 6, wherein the first multiplication accumulation window is further specifically configured to:

   in an $(nB+J)^{th}$ clock cycle, transmit a product $X_{1,J}^{nB+J}$ to a $PE_{2,J}$, and perform an addition operation on the product $X_{1,J}^{nB+J}$ and a product $X_{2,J}^{nB+J}$ to obtain a convolutional intermediate result $Q_{1}^{nB+J}$, wherein the product $X_{1,J}^{nB+J}$ is a product obtained after a $PE_{1,J}$ performs a multiplication operation on convolutional data of the $PE_{1,J}$ and a convolutional parameter of the $PE_{1,J}$ in the $(nB+J)^{th}$ clock cycle, and the product $X_{2,J}^{nB+J}$ is a product obtained after the $PE_{2,J}$ performs a multiplication operation on convolutional data of the $PE_{2,J}$ and a convolutional parameter of the $PE_{2,J}$ in the $(nB+J)^{th}$ clock cycle;

   transmit, to a $PE_{f+1,J}$, a convolutional intermediate result $Q_{f-1}^{nB+J}$ obtained after a $PE_{f,J}$ performs an addition operation, wherein f is set to an integer each time in ascending order of 2 to A-1 in sequence;

   perform an addition operation on the convolutional intermediate result $Q_{f-1}^{nB+J}$ and a product $X_{f+1,J}^{nB+J}$ obtained after the $PE_{f+1,J}$ performs a multiplication operation, to obtain a convolutional intermediate result $Q_{f}^{nB+J}$;

   transmit a convolutional intermediate result $Q_{A-1}^{nB+J}$ obtained in a $PE_{A,J}$ to the output control module for caching;

   transmit the convolutional intermediate result $Q_{A-1}^{nB+J}$ to the $PE_{1,J}$ in an $(nB+J+1)^{th}$ clock cycle, and use the convolutional intermediate result $Q_{A-1}^{nB+J}$ as an initial accumulation value of an addition operation performed in the $(nB+J+1)^{th}$ clock cycle; and

determine, as a convolutional result $S_J$, a convolutional intermediate result $Q_A^{nB+J+1}$ obtained in an ((n+1)B+J-1)$^{th}$ clock cycle.

8. The convolution operation chip according to claim 7, wherein when C is greater than or equal to 2, the first multiplication accumulation window further comprises:

   a first register, disposed between the $PE_{X,Y+1}$ and the $PE_{X,Y}$, and configured to store and transmit the convolutional parameter of the $PE_{X,Y}$;
   a second register, disposed between the $PE_{X,Y+1}$ and a $PE_{X+1,Y}$, and configured to store and transmit convolutional data of the $PE_{X+1,Y}$; and
   a third register, disposed between the $PE_{X,Y+1}$ and a $PE_{X+1,Y+1}$, and configured to store and transmit a convolutional intermediate result; wherein
   the first register and the second register are further configured to rhythmically align convolutional data of the $PE_{X,Y+1}$ and a convolutional parameter of the $PE_{X,Y+1}$ when the $PE_{X,Y+1}$ performs a multiplication operation, and the third register is further configured to rhythmically align, when the first multiplication accumulation window performs an addition operation, a convolutional intermediate result transmitted by the $PE_{X,Y+1}$ and a product obtained after the $PE_{X+1,Y+1}$ performs a multiplication operation.

9. The convolution operation chip according to any one of claims 1 to 8, wherein the M×N multiplication accumulator array further comprises a second multiplication accumulation window, and the first multiplication accumulation window does not intersect with the second multiplication accumulation window.

10. The convolution operation chip according to claim 9, wherein the first convolutional data matrix is the same as a second convolutional data matrix, and the second convolutional data matrix is a convolutional data matrix to which convolutional data transmitted by the data cache module to the second multiplication accumulation window belongs; and
   the first convolutional parameter matrix is different from a second convolutional parameter matrix, and the second convolutional parameter matrix is a convolutional parameter matrix to which a convolutional parameter transmitted by the data cache module to the second multiplication accumulation window belongs.

11. The convolution operation chip according to claim 9, wherein the first convolutional data matrix is different from a second convolutional data matrix, and the second convolutional data matrix is a convolutional data matrix to which convolutional data transmitted by the data cache module to the second multiplication accumulation window belongs; and
   the first convolutional parameter matrix is the same as a second convolutional parameter matrix, and the second convolutional parameter matrix is a convolutional parameter matrix to which a convolutional parameter transmitted by the data cache module to the second multiplication accumulation window belongs.

12. A communications device, comprising a central processing unit CPU, a double data rate synchronous dynamic random access memory DDR SDRAM, and the convolution operation chip according to any one of claims 1 to 11 that are communicatively connected, wherein the CPU is configured to control the convolution operation chip to start the convolution operation, and the DDR SDRAM is configured to input the plurality of pieces of convolutional data and the plurality of convolutional parameters to the data cache module of the convolution operation chip.

SoC

CPU 100

DDR SDRAM 200

Convolution
operation chip 300

FIG. 1

Convolution operation chip 300

Data cache module
310

M×N
multiplication
accumulator
array 320

Array control
module 340

Output control
module 330

FIG. 2

FIG. 3

| | | |
|---|---|---|
| 0×k11 | | |
| 13×k21 | | |
| 26×k31 | | |

0×k11+13×k21+26×k31

FIG. 4

| | | |
|---|---|---|
| 1×k12 | 13×k11 | |
| 14×k22 | 26×k21 | |
| 27×k32 | 39×k31 | |

0×k11+13×k21+26×k31+
1×k12+14×k22+27×k32

13×k11+26×k21+39×k31

FIG. 5

FIG. 6

| INTERNATIONAL SEARCH REPORT | International application No. |
|---|---|
| | PCT/CN2017/105890 |

**A. CLASSIFICATION OF SUBJECT MATTER**

G06F 17/15 (2006.01) i

According to International Patent Classification (IPC) or to both national classification and IPC

**B. FIELDS SEARCHED**

Minimum documentation searched (classification system followed by classification symbols)

G06F; G06N

Documentation searched other than minimum documentation to the extent that such documents are included in the fields searched

Electronic data base consulted during the international search (name of data base and, where practicable, search terms used)

WPI, EPODOC, CNPAT, CNKI, IEEE, GOOGLE: 卷积, 乘, 累加, 矩阵, 系数, 参数, 窗口, convolution, convolv+, MAC, accumulat+, add+, matrix, multipl+, coefficient?, parameter?, window

**C. DOCUMENTS CONSIDERED TO BE RELEVANT**

| Category* | Citation of document, with indication, where appropriate, of the relevant passages | Relevant to claim No. |
|---|---|---|
| PX | CN 106844294 A (HUAWEI MACHINERY CO., LTD.), 13 June 2017 (13.06.2017), claims 1-12 | 1-12 |
| A | CN 104915322 A (NATIONAL UNIVERSITY OF DEFENSE TECHNOLOGY), 16 September 2015 (16.09.2015), description, paragraphs [0054]-[0090] | 1-12 |
| A | CN 104252331 A (HUAWEI TECHNOLOGIES CO., LTD.), 31 December 2014 (31.12.2014), entire document | 1-12 |
| A | CN 104899182 A (NATIONAL UNIVERSITY OF DEFENSE TECHNOLOGY), 09 September 2015 (09.09.2015), entire document | 1-12 |
| A | WO 2016186811 A1 (GOOGLE INC.), 24 November 2016 (24.11.2016), entire document | 1-12 |
| A | US 4489393 A (TRW INC.), 18 December 1984 (18.12.1984), entire document | 1-12 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 January 2018 | 16 January 2018 |
| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>ZHAO, Ting<br><br>Telephone No. (86-10) 53961350 |

Form PCT/ISA/210 (second sheet) (July 2009)

## INTERNATIONAL SEARCH REPORT
### Information on patent family members

| International application No. |
| --- |
| PCT/CN2017/105890 |

| Patent Documents referred in the Report | Publication Date | Patent Family | Publication Date |
| --- | --- | --- | --- |
| CN 106844294 A | 13 June 2017 | None | |
| CN 104915322 A | 16 September 2015 | None | |
| CN 104252331 A | 31 December 2014 | None | |
| CN 104899182 A | 09 September 2015 | None | |
| WO 2016186811 A1 | 24 November 2016 | US 2017103316 A1 | 13 April 2017 |
| | | TW 201706871 A | 16 February 2017 |
| | | DE 202016107443 U1 | 23 February 2017 |
| US 4489393 A | 18 December 1984 | JP S58117075 A | 12 July 1983 |
| | | EP 0080836 A2 | 08 June 1983 |

Form PCT/ISA/210 (patent family annex) (July 2009)

**REFERENCES CITED IN THE DESCRIPTION**

**Patent documents cited in the description**

- CN 201611243272 X